# EUROPEAN PATENT SPECIFICATION

(11) **EP 4 307 106 B1**
(45) Date of publication and mention of the grant of the patent: **12.08.2026**
(21) Application number: 22766303.6
(22) Date of filing: 08.03.2022
(51) Int. Cl.: G06F 8/38, G06F 9/44, G06F 8/34

(54) **VISUAL SOFTWARE DEVELOPMENT SYSTEM, METHOD AND APPARATUS, AND COMPUTER STORAGE MEDIUM**
SYSTEM, VERFAHREN UND VORRICHTUNG ZUR ENTWICKLUNG VISUELLER SOFTWARE UND COMPUTERSPEICHERMEDIUM
SYSTÈME, PROCÉDÉ ET APPAREIL DE DÉVELOPPEMENT DE LOGICIEL VISUEL, ET SUPPORT DE STOCKAGE INFORMATIQUE

(30) Priority: 08.03.2021 CN 202110251760
(43) Date of publication of application: 17.01.2024
(73) Proprietor: Hangzhou Hikrobot Co., Ltd., Hangzhou, Zhejiang 310051 (CN)
(72) Inventor: HU, Zhigang, Hangzhou, Zhejiang 310051 (CN); HU, Jingxiang, Hangzhou, Zhejiang 310051 (CN); ZHANG, Wencong, Hangzhou, Zhejiang 310051 (CN)
(74) Representative: Epping - Hermann - Fischer
(86) International application number: PCT/CN2022/079753
(87) International publication number: WO 2022/188780

(56) References cited:
- WO-A1-2012/044958
- CN-A- 108 733 368
- CN-A- 112 363 730
- CN-A- 113 050 938
- US-B1- 6 298 474
- O'LEARY NICK: "Node-RED AI Photo Booth Workshop", 13 November 2020 (2020-11-13), pages 1 - 77, XP093178909, Retrieved from the Internet <URL:https://knolleary.net/node-red-workshop-photobooth/pdf/node-red-workshop-photobooth.pdf> [retrieved on 20240627]

## Description

The present disclosure claims the priority to a Chinese patent application No. 202110251760.X filed with the China National Intellectual Property Administration on March 08, 2021 and entitled "System, Method, Apparatus for Visual Software Development and Computer Storage Medium".

### Technical field

The embodiments of the present disclosure relates to the technical field of machine vision, in particular to a system, method, apparatus for visual software development and computer storage medium.

### Background

Machine vision refers to a technology of measuring or judging by using a machine as a substitute for human eyes. In the technical field of machine vision, a specific function is realized by graphical flow charts as software instead of traditional language codes, so that more users can quickly develop meeting their own requirements. In the field of machine vision, visual software can also be called machine visual software. The visual software needs to be realized based on a visual software development system. Due to different user's requirements corresponding to different visual software, a key problem to be solved for the visual software development system at present is: how to build a visual software development system to make the visual software customized based on the visual software development system to meet user's requirements.

In the related art, in order to allow the developed visual software to meet user's requirements, it is usually configured with a visual software development system for each type of visual software. In this way, the visual software development system is professional, and the visual software developed based on the visual software development system can meet the specified user's requirements. However, the visual software development system in the related art is not universal, resulting in a need to configure different types of visual software development systems for different types of visual software. Furthermore, when the user's requirements change temporarily, the visual software developed based on the existing visual software development system is difficult to meet the latest requirements of the user.

"Node RED AI Photo Booth Workshop" Retrieved from the Internet: URL:https:// knolleary.net/node-red-workshop-photobooth/pdf/node-red-workshop-photobooth.pdf [retrieved on 2024-06-27] discloses Node-RED Al Photo Booth Workshop. The building blocks of any Node-RED application are the nodes in its palette. Node-RED comes with a number of core nodes that provide the basic components, but the palette can be easily extended by installing additional nodes. Nodes are published as npm modules and the project provides an online catalogue of them at https:/flows.nodered.org. There are two ways to install nodes - via the command-line or from within the Node-RED editor. To install a node from within the editor, select the Manage Palette option from the main menu. This opens the Palette Manager which shows two tabs - a list of the modules you have installed and a searchable catalogue of modules available to install. Switch to the Install tab and search for random - you should see node-zed-node-random in the list below. Click the install button next to it.

WO 2012/044958 A1 discloses identification of semantically relevant concepts in a graphical model. In an embodiment, a plurality of graphical elements of a graphical model may be displayed on a display device. An indication of a graphical operation involving a first graphical element of the plurality of graphical elements may be received. The graphical operation when performed may establish a relationship between the first graphical element and one or more other graphical elements of the plurality of graphical elements that are compatible with the graphical operation. Two or more graphical elements of the plurality of graphical elements that are compatible with the graphical operation and one or more characteristics associated with the first graphical element may be identified. A visual indication may be provided on the display device. The visual indication may indicate that the identified plurality of graphical elements is compatible with the graphical operation.

### Summary

Embodiments of the present disclosure provide a system, a method and an apparatus for visual software development and computer storage medium, which can be used to develop visual software that meets different business requirements. The technical solutions are as follows.

The invention is set out in the appended set of claims.

The technical solution provided by the embodiment of the present disclosure at least has the beneficial effects that the embodiment of the present disclosure provides a system for visual software development. The application interface layer in the system for visual software development is configured to display a module adding control, which is configured to import module data of a third-party module to the data processing layer. In this way, the modules corresponding to the N module displaying controls displayed by the application interface layer include a third-party module. Therefore, in the embodiment of the present disclosure, the user can import the third-party module through the module adding control at any time based on the business requirements, and then the flow chart configured by the user, which is the visual software configured by the user, can be displayed through the application interface layer based on the third-party module, and the flow chart can be run through the data processing layer, thus completing the development flow of the visual software.

Therefore, the system for visual software development provided by the embodiment of the present disclosure is a universal open system for visual software development, which allows the user to develop different third-party modules based on different business requirements, and mount the developed third-party modules in the system for software development provided by the embodiment of the present disclosure, so that the subsequently developed visual software can better meet the individual requirements of different businesses. In this way, it is not necessary to configure different systems for visual software development for different types of visual software, and different types of visual software can be developed on the system for visual software development provided by the embodiment of the present disclosure.

In addition, even if business requirements or user requirements temporarily change, the user can temporarily develop a new third-party module through the system for visual software development provided by the embodiment of the present disclosure, and then mount the developed new third-party module in the system for software development provided by the embodiment of the present disclosure, so that the subsequently developed visual software can quickly adapt to the latest requirements of the user.

### Brief Description of the Drawings

In order to explain the technical solutions of the embodiments of the present invention and the prior art more clearly, the drawings needed to be used in the embodiments and the prior art are briefly introduced below. Obviously, the drawings in the following description are only some embodiments of the present invention, and those skilled in the art can also obtain other drawings according to these drawings.
Fig. 1 is a schematic diagram of architecture of a system for visual software development provided by an embodiment of the present disclosure;
Fig. 2 is a schematic diagram of a main interface displayed by an application interface layer provided by an embodiment of the present disclosure;
Fig. 3 is a schematic flow chart provided by an embodiment of the present disclosure;
Fig. 4 is a schematic diagram of a module provided by an embodiment of the present disclosure;
Fig. 5 is a schematic diagram of format of module data of a third-party module provided by an embodiment of the present disclosure;
Fig. 6 is a schematic diagram of configuration process and code exporting of a running interface provided by an embodiment of the present disclosure;
Fig. 7 is a schematic diagram of format of module data of a third-party module provided by an embodiment of the present disclosure;
Fig. 8 is a schematic diagram of configuration process and code exporting of a running interface provided by an embodiment of the present disclosure;
Fig. 9 is a schematic flow chart of module registration provided by an embodiment of the present disclosure;
Fig. 10 is a flow chart of a method for module loading and module registration provided by an embodiment of the present disclosure;
Fig. 11 is a flow chart of a method for configuring the flow chart provided by an embodiment of the present disclosure;
Fig. 12 is a schematic structure diagram of an apparatus for visual software development provided by an embodiment of the present disclosure.

### Detailed Description

In order to make the purpose, technical solution and advantages of the present invention more clear, the present invention will be further described in detail with reference to the attached drawings and embodiments. Obviously, the described embodiment is only a part, not all of the embodiments of the present invention.

It should be understood that "multiple" mentioned herein means two or more. In the description of the present disclosure, unless otherwise specified, "/" means "or". For example, A/B can mean A or B; "and/or" herein is only a kind of relationship that describes related objects, which means that there can be three kinds of relationships. For example, A and/or B can mean that A exists alone, A and B exist simultaneously, and B exists alone. In addition, in order to clearly describe the technical solutions of the embodiments of the present disclosure, the words "first" and "second" are used in the embodiments of the present disclosure to distinguish the same or similar items with basically the same functions and effects. Those skilled in the art can understand that the words such as "first" and "second" do not limit the number and the execution order, and the words such as "first" and "second" are not necessarily different.

Before describing the system for visual software development provided by the embodiments of the present disclosure in detail, application scenarios involved in the embodiment of the present disclosure are described in detail.

At present, a main principle of machine vision is that a detected object is converted into an image signal by an image acquisition apparatus, then the image signal is subjected to special image processing, and characteristic information of the detected object is obtained based on analysis of a result of the image processing, and then a detection result for the object is determined according to the characteristic information of the object.

Based on the operating principle of machine vision, machine vision technology is widely used in various fields at present. In industrial technology, machine vision technology can be used to detect appearances and surface defects of products, for example, wood processing inspection, metal surface inspection, printed circuit board defect inspection, automatic weld defect identification and so on. In the medical field, machine vision technology can assist doctors to diagnose the size, shape and abnormality of human pathogens, thus providing evidences for effective diagnosis. In the field of traffic monitoring technology, machine vision technology can be used for automatically recognizing license plates of valid and retrograde vehicles. The foregoing is only an illustration of the application field of machine vision technology, and the embodiments of the present disclosure is not limited to the specific application field of machine vision technology.

Vision software is software to realize the above machine vision technology, that is, the above specific detection function for the object can be realized through the vision software. Furthermore, in order to facilitate a developer to develop visual software quickly, in machine vision technology, the developer can use graphical flow charts to develop visual software instead of traditional language codes at present. That is to say, visual software can be displayed graphically in a manner of a flow chart, so that a developer can easily understand an internal execution logic of visual software. In the flow chart of the visual software, the flow chart is formed by connecting multiple modules according to a certain connection relationship, each module is used to realize a specific sub-function, and the connection relationship of individual module indicates an execution order of individual modules. Therefore, the flow chart can indicate the internal execution logic of visual software.

The system for visual software development provided by an embodiment of the present disclosure is applied to a scene of developing the visual software in a manner of graphical flow charts. The purpose is to provide a universal system for visual software development, through which a developer can customize required visual software according to business requirements.

For the convenience of description, the system for visual software development involved in the embodiment of the present disclosure will be descripted in detail.

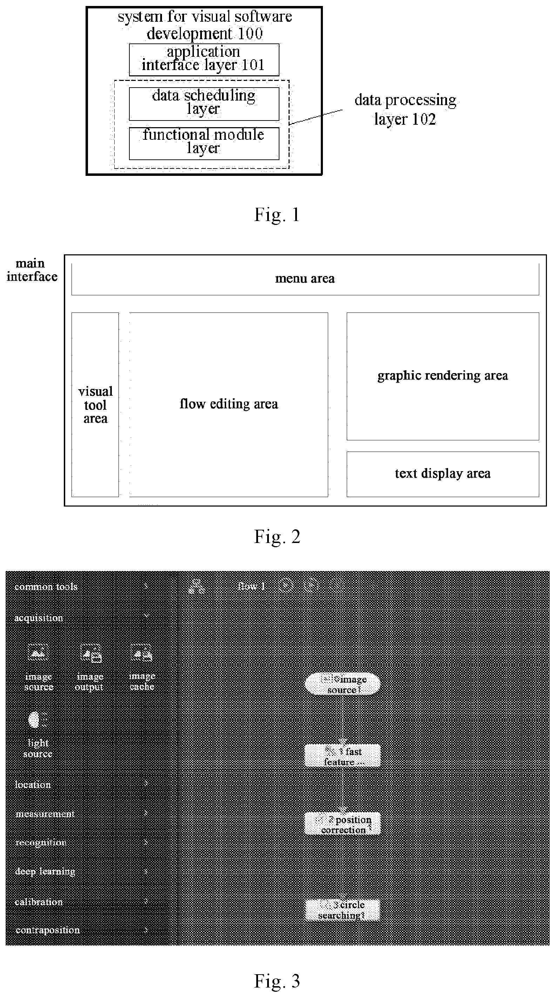

Fig. 1 is a schematic diagram of architecture of a system for visual software development provided by an embodiment of the present disclosure. As shown in Fig. 1, the system for visual software development 100 includes an application interface layer 101 and a data processing layer 102.

The application interface layer 101 is configured to display N module displaying controls, wherein N is a positive integer greater than or equal to 1, and the N module displaying controls correspond to N modules respectively. Module data of each of the N modules is stored in the data processing layer 102, and the module data includes an execution logic of a corresponding module. The application interface layer 101 is further configured to display a flow chart in response to a first operation of a user on one or more module displaying controls in the N module displaying controls, the flow chart indicating an execution order of modules respectively corresponding to the one or more module displaying controls. The data processing layer 102 is configured to call and run the module data of the modules respectively corresponding to the one or more module displaying controls in response to the flow chart displayed by the application interface layer 101, to obtain a data processing result of the flow chart, and return the data processing result to the application interface layer 101.

The first operation may be a drag operation, a click operation, and the like. A user (such as a developer) can configure the flow chart, which is the visual software that meets a certain business requirement, through the module displaying controls corresponding to the N modules displayed by the application interface layer. The flow chart includes one or more of the N modules and a connection relationship of the one or more modules. The connection relationship of modules in the flow chart indicates the execution order of modules. For example, if module A points to module B in the flow chart, the data processing layer will first execute related logic based on the module data of module A, and then execute related logic based on the module data of module B.

During configuring the flow chart by the user in the application interface layer, the data processing layer can call and run the module data of modules in the flow chart based on the flow chart displayed in the application interface layer, to obtain the data processing result of the flow chart and complete a development process of the configured flow chart.

Fig. 2 is a schematic diagram of a main interface displayed by the application interface layer provided by an embodiment of the present disclosure. As shown in Fig. 2, the main interface includes functional partitions such as menu area, visual tool area, flow editing area, graphic rendering area and text display area and the like.

The menu area is configured to display various controls for the main interface, such as interface view controls, page partition configuration controls. The visual tool area is configured to display that each of the module displaying controls. The flow editing area is configured to display the flow chart configured by the user. The user can display the module displaying controls of the visual tool area in the flow editing area by dragging to configure the flow chart. The graphic rendering area is configured to display a graphic processing result of a certain module in the flow chart, and the graphic processing result is presented in graphic. The text display area is configured to display a data processing result of a certain module in the flow chart, and the data processing result is presented in text. For example, for the flow chart displayed in the flow editing area, when the user clicks a certain module in the flow chart, the graphic rendering area can display the graphic processing result of the module in the flow chart, and the text display area can display the data processing result in a text format of the module in the flow chart. It should be noted that the graphic rendering area and the text display area are both result display areas for the processing result of a certain module. The embodiment of the present disclosure does not limit a display mode of the processing result of a certain module, which can be displayed only in graphic, only in text, or in both graphic and text.

Based on the main interface shown in Fig. 2, it can be seen that the application interface layer provided by the embodiment of the present disclosure adopts graphical interaction design, and the flow chart can be generated by dragging the module displaying controls in the visual tool area, so that the visual software can be realized in a manner of graphical flow chart.

Fig. 3 is a schematic diagram of a flow chart provided by an embodiment of the present disclosure. As shown in Fig. 3, common tools on the left side of Fig. 3 are the module displaying controls in the visual tool area, and the flow chart configured by the user is on the right side of Fig. 3, which includes four modules, i.e., image source 1 module, rapid feature analysis module, position correction module, and circle searching module. The image source 1 module points to the fast feature analysis module, the fast feature analysis module points to the position correction module, and the position correction module points to the circle searching module. A visual software solution presented in the flow chart is that: for the image source 1, a rapid feature analysis is performed firstly, then a position correction is performed, and finally a circle searching is performed. These four modules are modules corresponding to the module displaying controls in the common tool partition shown on the left side of Fig. 3.

It should be noted that the main interface shown in Fig. 2 and Fig. 3 is only an example of the main interface provided by the application interface layer. The functional partitions displayed on the main interface and combination modes of different functional partitions can be customized by the user, which is not described in detail in the embodiment of the present disclosure. In addition, controls shown in Fig. 2 and Fig. 3, such as module displaying controls, can have features such as being packaged independently, being displayed in a configurable way and so on. Other controls involved in subsequent embodiments can have these features, which will not be repeated in the following.

Being packaged independently means that data corresponding to each of the controls is packaged independently in the data processing layer. There is no data interaction among the controls, and all the data corresponding to the controls is oriented to the data processing layer. The data corresponding to each of the controls includes information such as display size, display color and other information of the control displayed in the application interface layer. At this time, when the data corresponding to the control in the data processing layer changes, the control displayed in the application interface layer will change accordingly. In this way, each control can be used independently to avoid the mutual influence of controls.

Being displayed in a configurable way means that display information such as display position, display size and display color of each control displayed on the application interface layer can be modified by the user based on his/her own requirements. In this manner, the controls displayed in the application interface layer can meet the requirements of the user as much as possible. For example, the user can drag a control through a mouse, and the application interface layer modifies the display position of the control in response to the mouse drag event for the control, and saves the modified display position of the control in a configuration file corresponding to the control. The configuration file corresponding to the control is recorded in the data processing layer. Through the feature of "being displayed in a configurable way", the display size, display position and display color of the control displayed in the application interface layer can be modified. Optionally, each control has a minimum display size to avoid that the display size is too small to affect the layout of the control on the main interface.

In the embodiment of the present disclosure, in the system shown in Fig. 1, the application interface layer 101 is further configured to display a module adding control, which is configured to import module data of a third-party module to the data processing layer 102. Because the third-party module can be any functional data packet configured by the user based on the business requirements, based on the system shown in Fig. 1, the user can import the third-party module at any time based on the business requirements through the module adding control displayed in the application interface layer, and then the user can configure the flow chart including the third-party module in the application interface layer and run the flow chart through the data processing layer, thus completing the development process of visual software. That is, based on the system shown in Fig. 1, the user can customize visual software at any time based on the business requirements.

In one possible implementation, when detecting an operation on the module adding control, the application interface layer can display a module loading window, then acquire the module data of the third-party module imported by the user through the module loading window, and store the module data in the data processing layer. Subsequently, the third-party module can be displayed in the application interface layer in a way of a third-party module displaying control. That is, the system provided by the embodiment of the present disclosure is allowed to add the third-party module developed by a third-party developer into the main interface of the application interface layer. The displaying the third-party module in the application interface layer in a way of a third-party module displaying control can be realized by module registration, and related contents about the module registration will be described in detail in following embodiments, which will not be elaborated here.

In addition, when adding the module displaying control corresponding to the module data of the data processing layer to the main interface, descriptive information on a module corresponding to the added module displaying control can also be added to the configuration file of the main interface. The descriptive information includes but is not limited to module name, module icon, storage path of module data corresponding to the module and other information. In this way, when displaying the module displaying control corresponding to the module on the main interface, the application interface layer can also display the module name, module icon and other information of the module.

Therefore, the system for visual software development provided by the embodiment of the present disclosure is an universal open system for visual software development, which allows the user to develop different third-party modules based on different business requirements, and mount the developed third-party modules in the system for software development provided by the embodiment of the present disclosure, so that the subsequently developed visual software can better meet the personalized requirements of different businesses. In this way, it is not necessary to configure different systems for visual software development for different types of visual software, and different types of visual software can be developed on the system for visual software development provided by the embodiment of the present disclosure.

In addition, even if business requirements or user requirements temporarily change, the user can temporarily develop a new third-party module through the system for visual software development provided by the embodiment of the present disclosure, and then mount the developed new third-party module in the system for software development provided by the embodiment of the present disclosure, so that the subsequently developed visual software can quickly adapt to the latest requirements of the user.

To sum up, the embodiment of the present disclosure provides an open-framework system for visual software development, which adopts an open-framework design and allows the user to carry out multi-level secondary development based on this framework according to actual application requirements, so the system for visual software development is both flexible and easy to use.

In addition, in the system shown in Fig. 1, as shown in Fig. 1, the data processing layer 102 may further include a data scheduling layer and a functional module layer. In this scenario, functions of the data processing layer are distributed to the data scheduling layer and the functional module layer, so as to effectively manage each module. The module data of N modules is stored in the functional module layer, and the data scheduling layer is configured to sequentially call and run the module data of the modules respectively corresponding to the one or more module displaying controls from the functional module layer according to the execution order of the modules respectively corresponding to the one or more module displaying controls in the flow chart, to obtain the data processing result.

That is, the functional module layer is configured to package the module data of each module and provide input and output interfaces of each module. The data scheduling layer is configured to call the module data of each module based on the input and output interfaces of each module, and then realize the function of each module in the flow chart. For example, when the data scheduling layer needs to call the module data of module A in the functional module layer, the data scheduling layer inputs data required by module A when running to the functional module layer through the input interface of module A, and then the functional module layer executes the execution logic of module A based on the input data to obtain result data, and sends the result data to the data scheduling layer through the output interface of module A. At this point, the data scheduling layer has completed the calling of module A in the functional module layer.

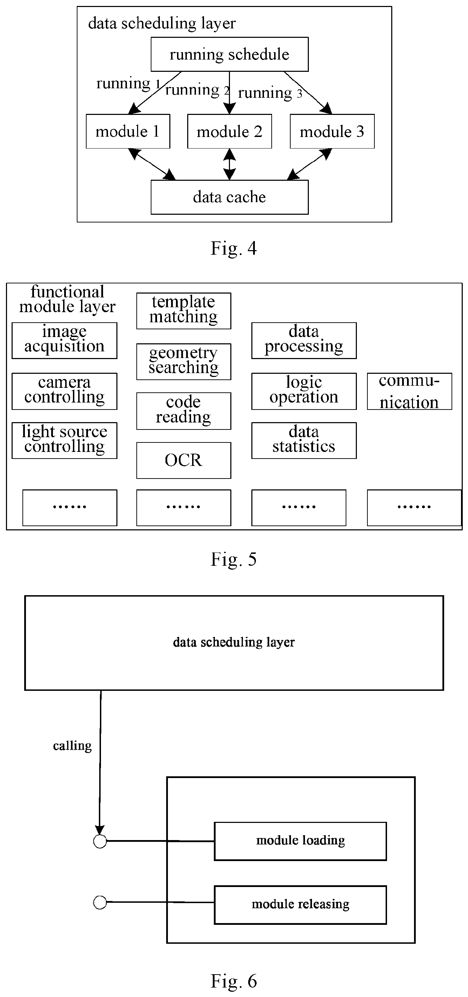

It should be noted that in order to improve the security of the module data of each module in the functional module layer, the module data of each module in the functional module layer is packaged independently. That is, there is no communication between modules in the functional module layer. The data in the functional module layer is called uniformly by the data scheduling layer. Fig. 4 is a schematic diagram of calling module data of each module in a functional module layer by a data scheduling layer provided by an embodiment of the present disclosure. As shown in Fig. 4, module 1, module 2 and module 3 are called independently by the data scheduling layer, and there is no cross among calling individual modules. That is, each module is run separately based on a running schedule, and the result data of each module is cached.

In the scenario where the data processing layer includes the data scheduling layer and the functional module layer, the data scheduling layer can record an order relationship of calling each module in the flow chart into a certain data structure before running the flow chart. The data structure can be, for example, a tree structure or a graph structure. Then, when the data scheduling layer runs the flow chart, it traverses the data structure in a certain order and calls interfaces of each module in the functional module layer in turn, thus completing the development process of the flow chart.

In addition, the modules involved in the embodiment of the present disclosure can be modules that realize any functions. The modules can include algorithm module, image acquisition module, data operation module, peripheral controlling module, communication module, etc., which is not limited by the embodiment of the present disclosure. Fig. 5 is a schematic diagram of a module provided by an embodiment of the present disclosure. As shown in Fig. 5, the modules involved in the embodiment of the present disclosure can include four categories of modules. The first category is modules corresponding to peripheral hardware, such as image acquisition module, camera controlling module, light source controlling module, etc. The second category is modules related to image processing, such as template matching module, geometry searching module, code reading module, OCR (optical character recognition) module, etc. The third category is modules related to data processing, such as data processing module, logic operation module, data statistics module, etc. The fourth category is modules related to communication.

The key functions of the system for visual software development provided by the embodiment of the present disclosure are explained above, and other functions of the system shown in Fig. 1 are further explained in detail below. It should be noted that the following functions are only illustrative explanation of the functions involved in the embodiment of the present disclosure, and do not constitute limitations on the functions of the system shown in Fig. 1.
1. The system for visual software development allows the independent design and development of module data of the third-party module.

Since the third-party module is not an existing module of the system itself, but a module independently designed and developed by the third party, the module data of the third-party module needs to meet rules specified by the system provided by the embodiment of the application in order to ensure that the imported third-party module can be successfully mounted on the system provided by the embodiment of the application.

Therefore, in one possible implementation, the application interface layer is configured to acquire the module data of the third-party module imported by the user through the module adding control in response to a second operation on the module adding control, and send the imported module data of the third-party module to the data processing layer. In this scenario, the data processing layer is configured to store the imported module data of the third-party module when the imported module data of the third-party module is verified to meet a reference rule, and return a module loading success message to the application interface layer, wherein the module loading success message indicates that the third-party module is successfully loaded. Accordingly, when the imported module data of the third-party module is verified to not meet the reference rule, the data processing layer does not store the imported module data of the third-party module, but returns a module loading failure message to the application interface layer, which indicates that the current loading of the third-party module has failed.

That is, when a developer imports a third-party module into the system, the data processing layer in the system will verify the module data of the third-party module, and only when it is verified that the imported module data of the third-party module meets the reference rule will the module data of the third-party module be successfully loaded into the data processing layer. So it can be ensured that the third-party module mounted under the system for visual software development provided by the embodiment of the present disclosure can be compatible with the existing modules of the system for visual software development itself.

In addition, in order to facilitate the developer to quickly understand the rule that module data of third-party modules imported into the system need to meet, the system can explain the reference rule that module data of third-party modules need to meet. Therefore, in one possible implementation, the application interface layer in Fig. 1 is further configured to display a module configuration file indicating the aforementioned reference rule in response to a third operation on the module adding control. The third operation may be a click operation, a voice operation, and the like. For example, if the third operation is an operation of right double-click, when the user double-clicks the module adding control displayed on the main interface with the right mouse button, the application interface layer can display the module configuration file. The module configuration file indicates the rule that the imported module data of the third-party module should meet, that is, the user can know the rule that the module data of the third-party module currently to be imported should meet by consulting the module configuration file.

Optionally, the developer who develops the third-party module can also know the reference rule that the module data of the third-party module imported into the system needs to meet through other ways, which is not limited by the embodiment of the present disclosure. For example, the developer can know the reference rule from relevant paper documents of the system for visual software development provided by the embodiment of the present disclosure.

Specifically, the above-mentioned reference rule may include a design mode of an input/output interface of the third-party module and/or a package mode of the module data of the third-party module. The design mode of the input/output interface of the third-party module includes a format of input data and/or output data. The format of input data or output data can specifically include information such as data sensitivity. The package mode of the module data of the third-party module indicates a storage format of the module data in the data processing layer, which can include any one of a dynamic link library, static link library, exe (executable) file and so on.

By the related function of the module adding control, the module developed by the third party can be loaded into the data processing layer. Specifically, in the scenario where the data processing layer includes the data scheduling layer and the functional module layer, loading the module developed by the third party into the data processing layer specifically means loading the module data of the module developed by the third party into the functional module layer. The module data of the module developed by the third party can be packaged into a dynamic library (or executable program) and stored in the functional module layer, and the functional module layer can generate a handle of the module developed by the third party (the handle is configured to uniquely identify the module), so that the data scheduling layer can call the module through the handle later.

In addition, in order to further open the module, the system shown in Fig. 1 also allows to delete the loaded module, that is, releasing the module. The specific implementation mode will not be described in detail here. Fig. 6 is a schematic diagram of module loading and module releasing provided by an embodiment of the present disclosure. As shown in Fig. 6, the data scheduling layer can load a certain module into the functional module layer in response to an operation performed by the user in the application interface layer, or delete a certain module, that is, release the module, from the functional module layer in response to the operation performed by the user in the application interface layer.

In addition, the first to third operations in the foregoing are all user operations triggered by the user on the corresponding control, which can be an click operation, voice operation, or slide operation, etc. The first to third operations are only used to distinguish different operations, and do not constitute limitations on specific user operations. The fourth to tenth operations involved in the following can refer to this explanation and will not be repeated in the following.

2. The system for visual software development allows the secondary development of the module data of any module by the user.

For the module that has been mounted under the system provided by the present disclosure, in order to ensure that the module can cope with changing business requirements at any time, the system for visual software development also allows the secondary development of the module data of the module by the user that has been mounted in the system, so that the secondary developed modules can meet the latest business requirements.

Therefore, in one possible implementation, the application interface layer is further configured to display a module configuration interface of a first module corresponding to a first module displaying control in the N module displaying controls in response to a fourth operation of the user on the first module displaying control, wherein the module configuration interface includes a plurality of module configuration controls, and any one of the module configuration controls is configured to instruct the user to edit a parameter(s) in execution of the first module. The first module displaying control is any one of the N module displaying controls. In this scenario, the application interface layer is further configured to: in response to a fifth operation on the any one of the module configuration controls, acquire a parameter(s) edited by the user through the any one of the module configuration controls, and send the edited parameter(s) to the data processing layer. The data processing layer is configured to update the module data of the first module based on the edited parameter(s). Through this process, the user can modify the module data of any module, so that the modified module data can meet the latest business requirements.

In addition, an opportunity for the secondary development of the module data of any module by the user can be that: after the user has configured the flow chart based on the application interface layer, the user carries out the secondary development of the module data of a certain module included in the flow chart. In this scenario, it is assumed that the user carries out the secondary development of the module data of the first module included in the flow chart, and the data processing layer is further configured to update the data processing result of the flow chart based on the updated module data of the first module, and return the updated data processing result to the application interface layer.

That is, after the user has configured the flow chart based on the application interface layer, if the user carries out the secondary development of the module data of a certain module included in the flow chart, the system for visual software development will automatically update the data processing result of the flow chart based on the updated module data.

The parameter(s) in the execution of the first module may include an input parameter, output parameter, and other related parameters in the execution, etc. The module configuration controls can include a character configuration control, a plastic configuration control, a floating-point configuration control, an enumeration configuration control, etc.

The above module configuration interface can be an interface which is pre-configured for all modules by the system, that is, the module configuration interface is the default module configuration interface of the system. In one possible implementation, the system pre-stores module configuration interface files for all modules, which are configured to indicate relevant contents of the module configuration interface, and the application interface layer can display the default module configuration interface after loading the module configuration interface files. For example, the fourth operation is a double-click operation. When the module displaying control corresponding to the first module displayed on the main interface is double-clicked, the application interface layer dynamically generates a default module configuration interface of the system according to a default module configuration interface file defined by XML (eXtensible Markup Language).

Optionally, if the first module, on which the secondary development is performed by the user, is a third-party module, the module configuration interface of the first module can also be independently designed by the third party. At this time, when importing the module data of the first module into the system, the imported module data of the first module may also include a module configuration interface file customized by the third party for the first module, which is configured to indicate the program code of the module configuration interface corresponding to the first module. At this time, the module configuration interface of the first module displayed by the application interface layer is displayed according to the module configuration interface file in the module data of the first module. The module configuration interface file independently designed by the third party can also be a configuration file defined by XML.

In addition, in the module configuration interface file, the third party can also specify the name of a module configuration control in a specific module configuration control library. At this time, the module data of the third-party module can also include the specific module configuration control library provided by the third party. In this scenario, when the application interface layer displays the module configuration interface based on the module configuration interface file provided by the third party, the displayed module configuration interface includes the module configuration control in the specific module configuration control library, thus facilitating the user to complete the configuration of the third party module based on the module configuration control in the module configuration control library provided by the third party.

The application interface layer provides interfaces for the module configuration control provided by the third party for acquiring or setting a parameter(s), so that the user can call or modify a relevant parameter(s) of the module configuration control provided by the third party based on these interfaces. The interfaces for acquiring or setting a parameter(s) can operate in the form of Key-Value, thus providing support for basic types of module configuration controls, such as int, float, string, etc. In addition, the interfaces for acquiring or setting a parameter(s) can also operate in the form of binary, because the operating in the form of binary allows calling bulk data, so when the interfaces for acquiring or setting a parameter(s) operates in the form of binary, the parameters of bulk data can be called or modified.

To sum up, in the embodiment of the present disclosure, for a default module (referred to as native module in the embodiment of the present disclosure) or the third-party module in the system, when the user triggers the module through the fourth operation, the module configuration interface already configured on the system can appear, and the module configuration interface displays module configuration controls such as input, output and a running parameter(s), so as to facilitate the user to modify a relevant parameter(s) of the module. Optionally, for the third-party module, the third party can also import a module configuration interface file, which is equivalent to the module configuration interface being provided by the third party.

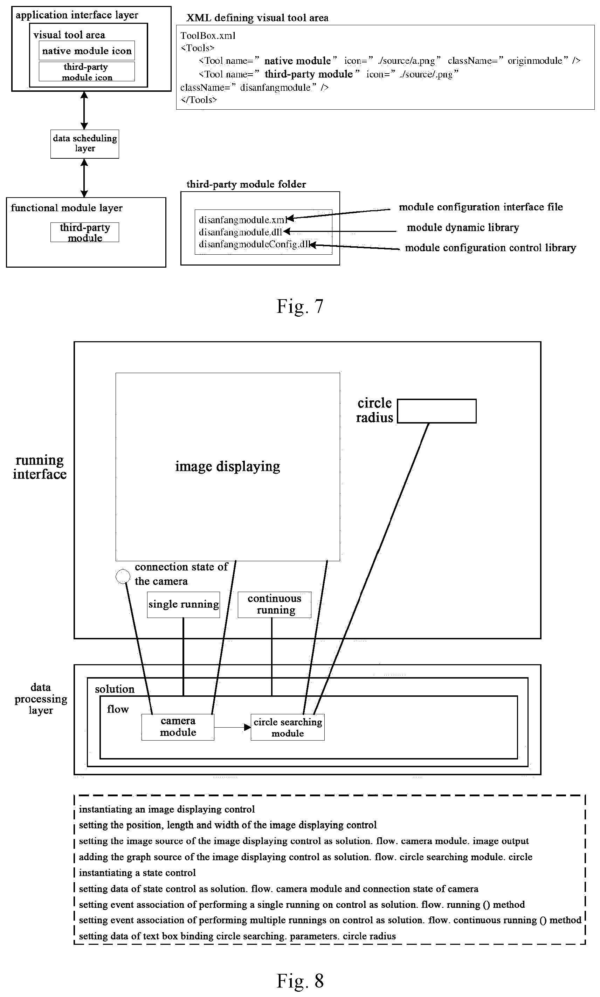

Fig. 7 is a schematic diagram of the format of module data of a third-party module provided by an embodiment of the present disclosure. As shown in Fig. 7, the data processing layer includes a data scheduling layer and a functional module layer. The visual tool area of the main interface of the application interface layer displays a module displaying control for the native module, and the module displaying control is displayed as an icon of the native module. The visual tool area also displays a module displaying control for the third-party module, and the module displaying control is displayed as an icon of the third-party module. The XML corresponding to displaying such an interface is shown in Fig. 7, that is, codes for displaying the module displaying controls of the two modules are as follows:

```
     ToolBox.xml
     <Tools>
             <Tool name="native module" icon="./source/a.png"
 className="originmodule"/>
             <Tool name="third-party module" icon="./source/.png"
 className="disanfangmodule"/>
     </Tools>
```

In addition, as shown in Fig. 7, the module data of the third-party module is stored in the functional module layer. The module data of the third-party module includes module configuration interface file, module dynamic library and module configuration control library for the third-party module. In Fig. 7, codes of the module data of the third-party module are as follows:
disanfangmodule.xml/ referring to the module configuration interface file
disanfangmodule.dll/ referring to the module dynamic library
disanfangmoduleConfig.dll/ referring to the module configuration control library.

The internal execution logic of the third-party module can be acquired through the module dynamic library. The module configuration control library and the module configuration interface file have been described in detail in the previous embodiments, and will not be repeated here.

It should be noted that in order to be compatible with the system shown in Fig. 1, the module configuration interface file imported by the third party and the default module configuration interface file of the system should meet a same rule, so that the module configuration interface provided by the third party is compatible with the default module configuration interface of the present disclosure embodiment. This part of the content can be realized through the related content of the rule indicated in the aforementioned module configuration file, that is, the rule included in the module configuration file include the rule that the module configuration interface file imported by the third party needs to meet, which will not be described in detail here.

3. The system for visual software development allows to convert the flow chart into underlying code, so that the developer can further carry out the secondary development on it.

After the user configures the flow chart, in order to facilitate another user to further carry out the secondary development on the visual software indicated by the flow chart, the system provided by the embodiment of the present disclosure also allows to convert the flow chart into the underlying code, so that the developer can further carry out the secondary development. Therefore, according to the invention, the data processing layer is also configured to generate a first code package based on the flow chart, which indicates an execution logic of each of modules included in the flow chart and an execution order of the modules included in the flow chart, that is, the first code package indicates the internal execution logic of the flow chart. In this scenario, the data processing layer is also configured to control the application interface layer to display a first code control corresponding to the first code package. The first code control is configured to instruct the user to download the first code package. The first code package is allowed to be imported into a third-party system, and enables the flow chart to be displayed after being run on the third-party system.

After generating the first code package, the data processing layer can also store the first code package in a specified location, such as in the functional module layer. When the application interface layer detects a selection operation for the first code control, it can acquire the first code package, and then download the first code package to a specified location, for example, a specified location selected by the user, so that the user can import the first code package into the third-party system, and the flow chart configured on the system provided by the embodiment of the present disclosure is displayed on the third-party system after the first code package is run on the third-party system. In addition, the user can further carry out a secondary development of the flow chart based on the first code package on the third-party system to generate new visual software. That is, the embodiment of the present disclosure also provides an export mode, through which module calling and related data access relationships in the flow chart can be turned into codes. The codes can be used for reference by customers or integrated into their own software.

In addition, after generating the first code package, the data processing layer can also send the first code package to the application interface layer, and the application interface layer displays the first code package, so that the developer can modify the first code package online on the system provided by the embodiment of the present disclosure. In this scenario, the application interface layer can also update the displayed flow chart based on the modification of the first code package by the user after detecting the modification instruction for the first code package.

4. The system for visual software development provides a running interface, so that a developer can understand key pictures, graphics, or texts involved during running of visual software through the running interface.

Because only the basic process is displayed in the flow chart, and background running information of visual software will not be displayed. Therefore, in the embodiment of the present disclosure, in order to facilitate the developer to understand the running process of visual software, the system for visual software development also allows to display the background running information of the flow chart for the configured flow chart. In the embodiment of the present disclosure, the running information of the flow chart indicates intermediate data in running of the flow chart. The running information of the flow chart is also the background running information. Therefore, in a possible implementation, the application interface layer in the system shown in Fig. 1 is also configured to display a running interface displaying control, wherein the running interface displaying control indicates the displaying of a running interface for the flow chart, and the running interface is configured to display the running information of the flow chart, and the running information of the flow chart indicates the intermediate data in running of the flow chart. In this scenario, the application interface layer is configured to display the running interface in response to a sixth operation on the running interface displaying control, to enable the user to view the intermediate data in running of the flow chart based on the running interface.

For example, after the user configures the flow chart, when a click operation for the running interface displaying control is detected, the application interface layer displays a running interface, on which the running information of the flow chart is displayed. The running interface can be a functional partition on the current main interface. In addition, the specific contents displayed in the above running interface can be default information of the system.

Optionally, the specific contents displayed in the running interface can also be specified for the user's basic business requirements. At this time, the application interface layer is also configured to display a running interface configuration control, the running interface configuration control indicates the displaying of a running interface configuration interface which is configured to configure contents displayed on the running interface. In this scenario, the application interface layer is also configured to display the running interface configuration interface in response to a seventh operation on the running interface configuration control, and the running interface configuration interface is configured for the user to configure what information needs to be displayed in the running interface and a source of the displayed information.

In one possible implementation, the running interface configuration interface includes a plurality of running interface configuration sub-controls, and any one of the plurality of running interface configuration sub-controls corresponds to an open option. At this time, the application interface layer is further configured to display a content source option in response to an eighth operation on the open option of a first running interface configuration sub-control of the plurality of running interface configuration sub-controls, and to bind the first running interface configuration sub-control with one module in the flow chart in response to a ninth operation on the content source option. After binding the first running interface configuration sub-control with one module in the flow chart, display information corresponding to the first running interface configuration sub-control can be displayed on the running interface, and the display information is derived from the data of the module bound to the first running interface configuration sub-control.

That is, the system shown in Fig. 1 provides an editable running interface, such that the user designs the running interface of the flow chart according to the actual application requirements. In this way, when making visual software, customers can present some key pictures, graphics and texts involved in visual software through the running interface. The above-mentioned running interface configuration sub-controls can include an image control, a text display box, a parameter setting box, a status light, a button, a table, etc. When configuring the running interface, what information needs to be displayed on the running interface is configured through these running interface configuration sub-controls, and then the information to be displayed is bound with the module data of the module in the flow chart, that is, the source of the displayed information is indicated, so as to configure a running interface that meets the business requirements.

In addition, after the user configures the running interface, in order to facilitate other users to further carry out a secondary development on the running interface, the system provided by the embodiment of the present disclosure also allows to convert the running interface into the underlying code, so that developers can further carry out a secondary development on it.

Therefore, in one possible implementation, the data processing layer is also configured to export the program code of the running interface as a second code package. At this time, the data processing layer is also configured to control the application interface layer to display a second code control corresponding to the second code package. The second code control is configured to instruct the user to download the second code package, wherein the second code package is allowed to be imported into a third-party system, and enables the running interface to be displayed after being run on the third-party system.

After generating the second code package, the data processing layer can also store the second code package in a specified location, such as in the functional module layer. Then, when the application interface layer detects a selection operation on the second code control, it can acquire the second code package, and then download the second code package in a specified location, for example, a specified location selected by the user, so that the user can import the second code package into a third-party system, and the running interface configured on the system provided by the embodiment of the present disclosure is displayed after the second code package is run on the third-party system. In addition, the user can further carry out a secondary development on the visual software based on the second code package in the third-party system to generate a new running interface.

Therefore, in the embodiment of the present disclosure, the running interface can be translated into code, thus forming an export code project based on the interface development SDK (Software Development Kit), so that the customer can continue to develop other functions based on this project, or integrate the visual part into their software. That is, by translating the running interface into code, the running interface can be opened to the customer.

Fig. 8 is a schematic diagram of configuration process and code exporting of a running interface provided by an embodiment of the application. The configured running interface is indicated in the upper block of Fig. 8. As shown in Fig. 8, the running interface is configured to display an image, which is an image collected by a camera and then processed by circle search. A connection state of the camera is displayed in the running interface, and a circle radius determined after performing circle searching on the image collected by the camera is also displayed in the running interface. The image displayed on the running interface is determined according to data after the execution of camera module and data after the execution of the circle searching module. The circle radius determined after performing the circle searching is determined according to the data after the execution of the circle searching module. In addition, the connection state of the camera is determined according to data during the execution of the camera module. In addition, a single run or multiple runs (i.e. continuous run) can be displayed on the running interface, with the single run indicating to run the flow chart only once and multiple runs indicating to run the flow chart multiple times. The contents displayed on the above-mentioned running interface and the source of the displayed contents can be realized through the related running interface configuration sub-control on the above-mentioned running interface configuration interface, and no examples are given here. The dashed block at the bottom of Fig. 8 indicates the code corresponding to the displayed running interface, which is displayed in text, that is, through this code, the customers can make the running interface as shown in the top of Fig. 8 displayed in their own software, thus realizing the opening of the running interface.

5. The system for visual software development allows registration and verification of validity of the module.

In order to improve universality and professionality of the system for visual software development provided by the embodiment of the present disclosure, in the embodiment of the present disclosure, the data processing layer can store the module data of massive modules. When the user uses the system provided in the embodiment of the present disclosure, the user only need to select a module needed by the current business from the massive modules and load the same on the application interface layer. That is, each customer can select to register some modules from massive modules based on their own business requirements, so as to facilitate the development of a flow chart that meet their own business requirements while reducing the burden of data storage and processing in the application interface layer of the system.

Therefore, in one possible implementation, the data processing layer is configured to store module data of M modules, wherein M is a positive integer greater than or equal to N. At this time, the application interface layer is also configured to display a module registration control, and the application interface layer is configured to display N module displaying controls in response to the N modules selected by the user from M modules through the module registration control. That is, when the system is initialized, the user can select some modules to register to the application interface layer through the module registration control. In this way, the application interface layer does not need to display all the modules of the data processing layer, so as to simplify the main interface displayed by the current application interface layer.

In addition, in order to improve the security of module data and prevent a malicious user from arbitrarily changing the module data corresponding to the module, the module registered to the application interface layer is a module verified to be valid. That is, the N modules corresponding to the N module displaying controls displayed on the application interface layer shown in Fig. 1 are modules that are verified to be valid by the data processing layer. The module verified to be valid refers to a corresponding module that the user has permission to use. In this scenario, for each module configured in the data processing layer of the system, the permission of each module can be configured in advance, which indicates which users are permitted to use the corresponding module. In this way, when a user registers a certain module in the above way, the system will verify the user's permission, and if the user is not permitted to the module, the system will refuse the user to register the module.

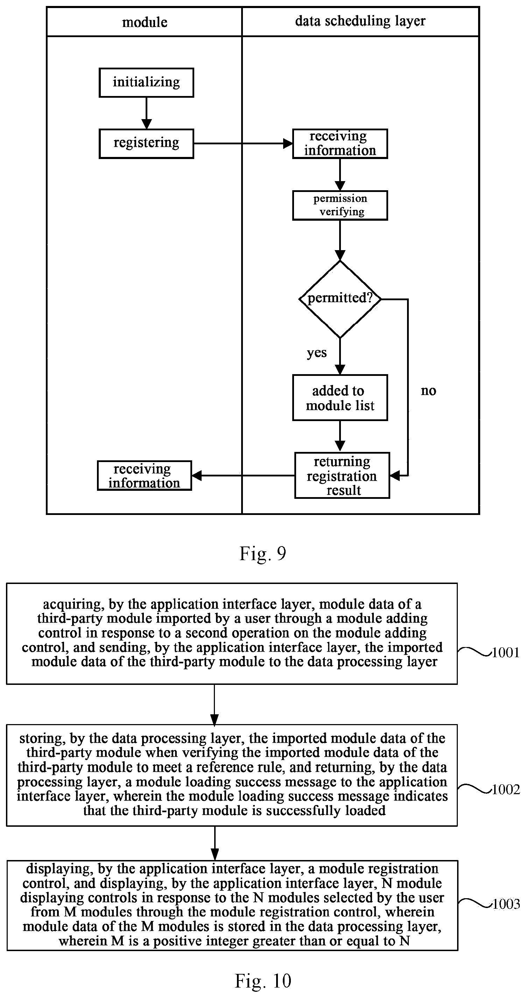

Fig. 9 is a schematic flow chart of module registration provided by an embodiment of the present disclosure. As shown in Fig. 9, after the system is initialized, if the application interface layer detects that the user needs to register a certain module at present based on the user's operation on the application interface layer, the application interface layer will send a registration request to the data scheduling layer. After receiving the registration request (that is, receiving information), the data scheduling layer verifies the user's permission, and if the user is verified to be permitted, the module is added to a registered module list, and the result of registration passing is sent to the application interface layer, so that the application interface layer can display the module displaying control for the module when the registration is passed. Accordingly, if the user is verified not to be permitted, the result of registration failure is sent to the application interface layer, and the application interface layer will not display the module displaying control for the module at this time. It should be noted that the verification process shown in Fig. 9 is realized when registering the module. Optionally, the verification process can also be realized during the module loading process shown in Fig. 6, which will not be described in detail here.

6. The system for visual software development allows the third party to call the module mounted under the system.

In the embodiment of the present disclosure, the system for visual software development can also allow the customer to call the module mounted under the system to other software, thus facilitating the customer to quickly develop other modules based on the module mounted under the system. Therefore, in a possible implementation, the application interface layer is also configured to display a calling control for any one of the module displaying controls, and the calling control indicates that the user is allowed to call a module corresponding to any one of the module displaying controls in a third-party system. In this scenario, the application interface layer is also configured to display an port link of the module data of a module corresponding to any one of the module displaying controls in response to a tenth operation on the calling control. The application interface layer is also configured to acquire, when detecting a data calling request for the port link sent by a third-party system, module data of the module corresponding to any one of the module displaying controls from the data processing layer based on the port link, and send the acquired module data to the third-party system.

That is, after displaying the calling control for any one of the module displaying controls, the application interface layer can provide the port link of the module data corresponding to the module when detecting a selection operation on the calling control, so that the customer can call the module data of the module based on the port link in other software.

To sum up, the embodiment of the present disclosure provides a system for visual software development. The application interface layer in the system for visual software development is configured to display the module adding control, which is configured to import module data of a third-party module to the data processing layer. In this way, modules corresponding to the N module displaying controls displayed on the application interface layer may include a third-party module. Therefore, in the embodiment of the present disclosure, the user can import the third-party module through the module adding control at any time based on the business requirements, and then the flow chart configured by the user, which is the visual software configured by the user, can be displayed through the application interface layer based on the third-party module, and the flow chart can be run through the data processing layer, thus completing the development flow of the visual software.

Therefore, the system for visual software development provided by the embodiment of the present disclosure is an universal open system for visual software development, which allows the user to develop different third-party modules based on different business requirements, and mount the developed third-party modules in the system for software development provided by the embodiment of the present disclosure, so that the subsequently developed visual software can better meet the individual requirements of different businesses. In this way, it is not necessary to configure different systems for visual software development for different types of visual software, and different types of visual software can be developed on the system for visual software development provided by the embodiment of the present disclosure.

In addition, even if business requirements or user requirements temporarily change, the user can temporarily develop a new third-party module through the system for visual software development provided by the embodiment of the present disclosure, and then mount the developed new third-party module in the system for software development provided by the embodiment of the present disclosure, so that the subsequently developed visual software can quickly adapt to the latest requirements of the user.

Based on the functions of the system for visual software development provided above, an embodiment of the present disclosure also provides a method for visual software development, which is applied to a system for visual software development including an application interface layer and a data processing layer. In addition, based on the above-mentioned contents related to the system, it can be seen that the functions of the system provided by the embodiment of the present disclosure can specifically include three aspects such as module loading, module registration and flow chart configuring. The following two embodiments will explain the three aspects respectively. Fig. 10 is a schematic flow chart of module loading and module registration provided by an embodiment of the present disclosure. As shown in Fig. 10, the method includes the following steps.

Step 1001: acquiring, by the application interface layer, module data of a third-party module imported by a user through a module adding control in response to a second operation on the module adding control, and sending, by the application interface layer, the imported module data of the third-party module to the data processing layer.

Step 1002: storing, by the data processing layer, the imported module data of the third-party module when verifying the imported module data of the third-party module to meet a reference rule, and returning, by the data processing layer, a module loading success message to the application interface layer, wherein the module loading success message indicates that the third-party module is successfully loaded.

Step 1003: displaying, by the application interface layer, a module registration control, and displaying, by the application interface layer, N module displaying controls in response to the N modules selected by the user from M modules through the module registration control, wherein module data of the M modules is stored in the data processing layer, wherein M is a positive integer greater than or equal to N.

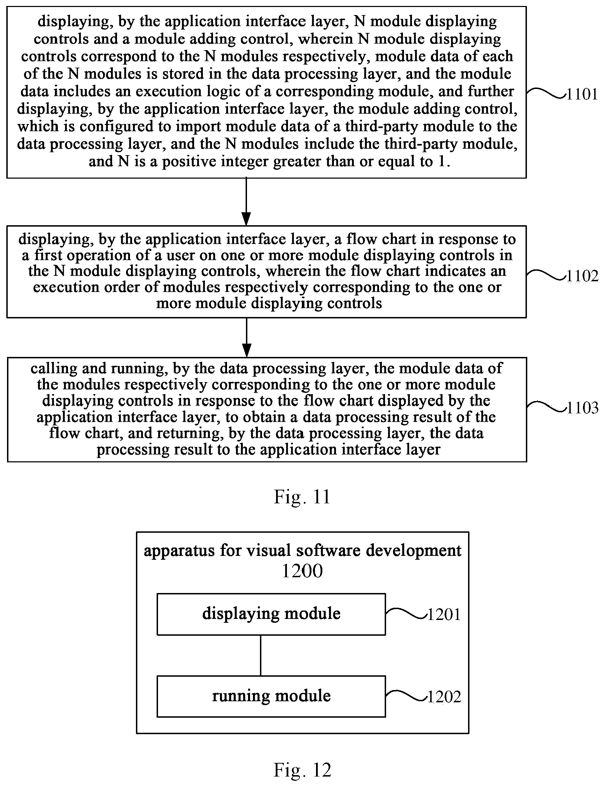

After module loading and module registration are completed based on the embodiment shown in Fig. 10, the flow chart can be configured on the system provided by the embodiment of the present disclosure, so as to realize the development of visual software. Fig. 11 is a flow chart of a method for configuring the flow chart provided by an embodiment of the present application. As shown in Fig. 11, the method includes the following steps:
Step 1101: displaying, by the application interface layer, N module displaying controls and a module adding control, wherein N module displaying controls correspond to the N modules respectively, module data of each of the N modules is stored in the data processing layer, and the module data includes an execution logic of a corresponding module, and further displaying, by the application interface layer, the module adding control, which is configured to import module data of a third-party module to the data processing layer, and the N modules include the third-party module, and N is a positive integer greater than or equal to 1.
Step 1102: displaying, by the application interface layer, a flow chart in response to a first operation of a user on one or more module displaying controls in the N module displaying controls, wherein the flow chart indicates an execution order of modules respectively corresponding to the one or more module displaying controls.
Step 1103: calling and running, by the data processing layer, the module data of the modules respectively corresponding to the one or more module displaying controls in response to the flow chart displayed by the application interface layer, to obtain a data processing result of the flow chart, and returning, by the data processing layer, the data processing result to the application interface layer.

On the basis of the methods provided in Fig. 10 and Fig. 11, in one possible implementation, the reference rule includes a design mode of an input/output interface of the third-party module and/or a package mode of the module data of the third-party module; wherein the design mode of the input/output interface of the third-party module includes a format of input data and/or output data of the third-party module, and the package mode of the module data of the third-party module indicates a storage format of the module data of the third-party module in the data processing layer, which includes any one of a dynamic link library, static link library, exe file and so on.

In one possible implementation, the method further includes: displaying, by the application interface layer, a module configuration file indicating the reference rule in response to a third operation on the module adding control.

In one possible implementation, the method further includes: displaying, by the application interface layer, a module configuration interface of a first module corresponding to a first module displaying control in the N module displaying controls in response to a fourth operation of the user on the first module displaying control, wherein the module configuration interface includes a plurality of module configuration controls, and any one of the plurality of the module configuration controls is configured to instruct the user to edit a parameter(s) in execution of the first module; in response to a fifth operation on any one of the module configuration controls, acquiring, by the application interface layer, a parameter(s) edited by the user through any one of the module configuration controls, and sending, by the application interface layer, the edited parameter(s) to the data processing layer; and updating, by the data processing layer, the module data of the first module based on the edited parameter(s); wherein, when the flow chart includes the first module, the data processing layer updates the data processing result of the flow chart based on the updated module data of the first module, and returns the updated data processing result to the application interface layer.

In one possible implementation, when the first module is a third-party module, the module data of the first module imported by the user through the module adding control also includes a module configuration interface file, which indicates a program code of the module configuration interface of the first module; the module configuration interface of the first module displayed by the application interface layer is displayed according to the module configuration interface file in the module data of the first module.

In one possible implementation, the method further includes: generating, by the data processing layer, a first code package based on the flow chart, wherein the first code package indicates an execution logic of each module included in the flow chart and an execution order of the modules included in the flow chart; and controlling, by the data processing layer, the application interface layer to display a first code control corresponding to the first code package, wherein, the first code control is configured to instruct the user to download the first code package, wherein the first code package is allowed to be imported into a third-party system, and enables the flow chart to be displayed after being run on the third-party system.

In a possible implementation, the method further includes: displaying, by the application interface layer, a running interface displaying control, wherein the running interface displaying control indicates the displaying of a running interface for the flow chart, and the running interface is configured to display running information of the flow chart, and the running information of the flow chart indicates intermediate data in running of the flow chart; and displaying, by the application interface layer, the running interface in response to a sixth operation on the running interface displaying control, to enable the user to view the intermediate data in running of the flow chart based on the running interface.

In one possible implementation, the method further includes: displaying, by the application interface layer, a running interface configuration control, wherein the running interface configuration control indicates the displaying of a running interface configuration interface which is configured to configure contents displayed on the running interface; displaying, by the application interface layer, the running interface configuration interface in response to a seventh operation on the running interface configuration control, wherein the running interface configuration interface includes a plurality of running interface configuration sub-controls, and any one of the plurality of running interface configuration sub-controls corresponds to an open option; displaying, by the application interface layer, a content source option in response to an eighth operation on the open option of a first running interface configuration sub-control of the plurality of running interface configuration sub-controls, and binding, by the application interface layer, the first running interface configuration sub-control with one module in the flow chart in response to a ninth operation on the content source option; wherein, the running information displayed on the running interface includes data of the module bound to the first running interface configuration sub-control.

In one possible implementation, the method further includes: exporting, by the data processing layer, a program code of the running interface as a second code package; controlling, by the data processing layer, the application interface layer to display a second code control corresponding to the second code package, wherein the second code control is configured to instruct the user to download the second code package, wherein the second code package is allowed to be imported into a third-party system, and enables the running interface to be displayed after being run on the third-party system.

In one possible implementation, the data processing layer includes a data scheduling layer and a functional module layer; wherein module data of N modules is stored in the functional module layer; the calling and running, by the data processing layer, the module data of the modules respectively corresponding to the one or more module displaying controls in response to the flow chart displayed by the application interface layer, to obtain the data processing result of the flow chart, includes: sequentially calling and running, by the data scheduling layer, the module data of the modules respectively corresponding to the one or more module displaying controls from the functional module layer according to the execution order of the modules respectively corresponding to the one or more module displaying controls in the flow chart, to obtain the data processing result.

In one possible implementation, the N modules are modules verified by the data processing layer to be valid, and the modules verified to be valid refer to corresponding modules that the user has permission to use.

In a possible implementation, the method further includes: displaying, by the application interface layer, a calling control for any one of the module displaying controls, wherein the calling control indicates that the user is allowed to call a module corresponding to any one of the module displaying controls in a third-party system; displaying, by the application interface layer, a port link of module data of the module corresponding to any one of the module displaying controls in response to a tenth operation on the calling control; acquiring, by the application interface layer, module data of the module corresponding to any one of the module displaying controls from the data processing layer based on the port link when detecting a data calling request for the port link sent by a third-party system, and sending, by the application interface layer, the acquired module data to the third-party system.

The implementation of any step in the above provided method can refer to the relevant explanation of the above-mentioned system, and will not be repeated here.

To sum up, the embodiment of the present disclosure provides a method for visual software development. The application interface layer in the system for visual software development to which this method is applied is configured to display the module adding control, which is configured to import module data of a third-party module to the data processing layer. In this way, the modules corresponding to the N module displaying controls displayed by the application interface layer may include the third-party module. Therefore, in the embodiment of the present disclosure, the user can import the third-party module through the module adding control at any time based on the business requirements, and then the flow chart configured by the user, which is the visual software configured by the user, is displayed through the application interface layer based on the third-party module, and the flow chart is run through the data processing layer, thus completing the development flow of the visual software.

Therefore, the system for visual software development provided by the embodiment of the present disclosure is an universal open system for visual software development, which allows the user to develop different third-party modules based on different business requirements, and mount the developed third-party modules in the system for software development provided by the embodiment of the present disclosure, so that the subsequently developed visual software can better meet the individual requirements of different businesses. In this way, it is not necessary to configure different systems for visual software development for different types of visual software, and different types of visual software can be developed on the system for visual software development provided by the embodiment of the present disclosure.

In addition, even if business requirements or user requirements temporarily change, the user can temporarily develop a new third-party module through the system for visual software development provided by the embodiment of the present disclosure, and then mount the developed new third-party module in the system for software development provided by the embodiment of the present disclosure, so that the subsequently developed visual software can quickly adapt to the latest requirements of the user.

Fig. 12 is a schematic structure diagram of an apparatus for visual software development provided by an embodiment of the present disclosure. The apparatus is deployed in the system for visual software development, which includes the application interface layer and data processing layer. As shown in Fig. 12, the apparatus for visual software development 1200 includes the following modules:
a displaying module 1201, configured to control the application interface layer to display N module displaying controls, wherein the N module displaying controls correspond to N modules respectively, module data of each of the N modules is stored in the data processing layer, and the module data includes an execution logic of a corresponding module, and wherein the application interface layer further displays a module adding control, which is configured to import module data of a third-party module to the data processing layer, and the N modules include the third-party module, and N is a positive integer greater than or equal to 1; the displaying module 1201 is further configured to control the application interface layer to display a flow chart in response to a first operation of a user on one or more module displaying controls in the N module displaying controls, wherein the flow chart indicates an execution order of modules respectively corresponding to the one or more module displaying controls; a running module 1202, configured to control the data processing layer to call and run the module data of the modules respectively corresponding to the one or more module displaying controls in response to the flow chart displayed by the application interface layer, to obtain a data processing result of the flow chart, and return the data processing result to the application interface layer.

In one possible implementation, the apparatus further includes: an acquiring module, configured to control the application interface layer to acquire the module data of the third-party module imported by the user through the module adding control in response to a second operation on module adding control, and send the imported module data of the third-party module to the data processing layer; a verifying module, configured to control the data processing layer to store the imported module data of the third-party module when verifying the imported module data of the third-party module to meet a reference rule, and return a module loading success message to the application interface layer, wherein the module loading success message indicates that the third-party module is successfully loaded.

In one possible implementation, the reference rule includes a design mode of an input/output interface of the third-party module and/or a package mode of the module data of the third-party module; wherein the design mode of the input/output interface of the third-party module includes a format of input data and/or output data of the third-party module, the package mode of the module data of the third-party module indicates a storage format of the module data of the third-party module in the data processing layer, which includes any one of a dynamic link library, static link library, exe file and so on.

In one possible implementation, the displaying module is further configured to control the application interface layer to display a module configuration file indicating the reference rule in response to a third operation on the module adding control.

In one possible implementation, the displaying module is further configured to control the application interface layer to display a module configuration interface of a first module corresponding to a first module displaying control in the N module displaying controls in response to a fourth operation of the user on the first module displaying control, wherein the module configuration interface includes a plurality of module configuration controls, and any one of the plurality of the module configuration controls is configured to instruct the user to edit a parameter(s) in execution of the first module; the apparatus further includes: an acquiring module, which is configured to control the application interface layer to acquire a parameter(s) edited by the user through any one of the module configuration controls in response to the fifth operation on any one of the module configuration controls, and send the edited parameter(s) to the data processing layer; an updating module, which is configured to control the data processing layer to update the module data of the first module based on the edited parameter(s); wherein when the flow chart includes the first module, the data processing layer updates the data processing result of the flow chart based on the updated module data of the first module, and returns the updated data processing result to the application interface layer.

In one possible implementation, when the first module is a third-party module, the module data of the first module imported by the user through the module adding control also includes a module configuration interface file, which indicates a program code of the module configuration interface of the first module; the module configuration interface of the first module displayed by the application interface layer is displayed according to the module configuration interface file in the module data of the first module.

In one possible implementation, the apparatus further includes: a generation module, configured to control the data processing layer to generate a first code package based on the flow chart, wherein the first code package indicates an execution logic of each module included in the flow chart and an execution order of the modules in the flow chart; a displaying module, configured to control the data processing layer to control the application interface layer to display a first code control corresponding to the first code package, wherein the first code control is configured to instruct the user to download the first code package, wherein the first code package is allowed to be imported into a third-party system, and enables the flow chart to be displayed after being run on the third-party system.

In one possible implementation, the displaying module is further configured to control the application interface layer to display a running interface displaying control, wherein the running interface displaying control indicates the displaying of a running interface for the flow chart, and the running interface is configured to display running information of the flow chart, and the running information of the flow chart indicates intermediate data in running of the flow chart; the displaying module is further configured to control the application interface layer to display the running interface in response to a sixth operation on the running interface displaying control, to enable the user to view the intermediate data in running of the flow chart based on the running interface.

In one possible implementation, the displaying module is further configured to control the application interface layer to display a running interface configuration control, where the running interface configuration control indicates the displaying of a running interface configuration interface which is configured to configure contents displayed on the running interface; the displaying module is further configured to control the application interface layer to display the running interface configuration interface in response to a seventh operation on the running interface configuration control, wherein the running interface configuration interface includes a plurality of running interface configuration sub-controls, and any one of the plurality of running interface configuration sub-controls corresponds to an open option; the displaying module is further configured to control the application interface layer to display a content source option in response to an eighth operation on the open option of a first running interface configuration sub-control of the plurality of running interface configuration sub-controls, and bind the first running interface configuration sub-control with one module in the flow chart in response to a ninth operation on the content source option; wherein, the running information displayed on the running interface includes data of the module bound to the first running interface configuration sub-control.

In one possible implementation, the apparatus further includes: an exporting module, configured to control the data processing layer to export a program code of the running interface as a second code package; wherein the displaying module is also configured to control the data processing layer to control the application interface layer to display a second code control corresponding to the second code package, wherein the second code control is configured to instruct the user to download the second code package, wherein the second code package is allowed to be imported into a third-party system, and enables the running interface to be displayed after being run on the third-party system.

In one possible implementation, the data processing layer includes a data scheduling layer and a functional module layer; module data of N modules is stored in the functional module layer; and the running module is configured to control the data scheduling layer to sequentially call and run the module data of the modules respectively corresponding to the one or more module displaying controls from the functional module layer according to the execution order of the modules respectively corresponding to the one or more module displaying controls in the flow chart, to obtain the data processing result.

In one possible implementation, the displaying module is further configured to control the application interface layer to display a module registration control, wherein the application interface layer displays the N module displaying controls in response to N modules selected by the user from M modules through the module registration control, wherein module data of the M modules is stored in the data processing layer, and M is a positive integer greater than or equal to N.

In one possible implementation, the N modules are modules verified by the data processing layer to be valid, and the modules verified to be valid refer to corresponding modules that the user has permission to use.

In one possible implementation, the displaying module is further configured to control the application interface layer to display a calling control for any one of the module displaying controls, wherein the calling control indicates that the user is allowed to call a module corresponding to any one of the module displaying controls in a third-party system; the displaying module is further configured to control the application interface layer to display a port link of module data of the module corresponding to any one of the module displaying controls in response to a tenth operation on the calling control; the apparatus further includes an acquiring module, which is configured to control the application interface layer to acquire module data of the module corresponding to any one of the module displaying controls from the data processing layer based on the port link when a data calling request for the port link sent by a third-party system is detected, and send the acquired module data to the third-party system.

To sum up, the embodiment of the present disclosure provides an apparatus for visual software development. The application interface layer in the system for visual software development in which the apparatus is deployed is configured to display the module adding control, which is configured to import module data of a third-party module to the data processing layer. In this way, the modules corresponding to the N module displaying controls displayed by the application interface layer may include the third-party module. Therefore, in the embodiment of the present disclosure, the user can import the third-party module through the module adding control at any time based on the business requirements, and then the flow chart configured by the user, which is the visual software configured by the user, is displayed through the application interface layer based on the third-party module, and the flow chart is run through the data processing layer, thus completing the development flow of the visual software.

Therefore, the system for visual software development provided by the embodiment of the present disclosure is an universal open system for visual software development, which allows the user to develop different third-party modules based on different business requirements, and mount the developed third-party modules in the system for software development provided by the embodiment of the present disclosure, so that the subsequently developed visual software can better meet the individual requirements of different businesses. In this way, it is not necessary to configure different systems for visual software development for different types of visual software, and different types of visual software can be developed on the system for visual software development provided by the embodiment of the present disclosure.

In addition, even if business requirements or user requirements temporarily change, the user can temporarily develop a new third-party module through the system for visual software development provided by the embodiment of the present disclosure, and then mount the developed new third-party module in the system for software development provided by the embodiment of the present disclosure, so that the subsequently developed visual software can quickly adapt to the latest requirements of the user.

It should be noted that when developing visual software, the apparatus for visual software development provided in the above embodiments is only illustrated by a way of the division of the above-mentioned functional modules. In practical application, the above-mentioned function can be allocated to and completed by different functional modules as required, that is, the internal structure of the device is divided into different functional modules to complete all or part of the above-mentioned functions. In addition, the apparatus for visual software development provided in the above embodiment belongs to the same concept as the embodiment of the method for visual software development, and the specific implementation of the apparatus can refer to the method embodiment, which is not repeated here.

Those skilled in the art can understand that all or part of the steps to realize the above-mentioned embodiment can be completed by hardware, or by related hardware which is instructed by a program, which can be stored in a computer-readable storage medium. The above-mentioned storage medium can be read-only memory, magnetic disk or optical disk, etc.

In another aspect, an apparatus for visual software development is provided, which includes: a processor; a memory for storing processor-executable instructions; wherein, the processor is configured to execute any step of the method for visual software development.

In another aspect, a computer-readable storage medium is provided, on which instructions are stored, the instructions which, when executed by a processor, implement any step of the above-mentioned method for visual software development.

In another aspect, a computer program product containing instructions is provided which, when run on a computer, causes the computer to implement any step of the above-mentioned method for visual software development.

## Claims

1. A method for visual software development, which is executed by a system for visual software development comprising an application interface layer (101) and a data processing layer (102), the method comprising: displaying (1101), by the application interface layer (101), N module displaying controls, wherein the N module displaying controls correspond to N modules respectively, module data of each of the N modules is stored in the data processing layer (102), and the module data comprises an execution logic of a corresponding module; further displaying, by the application interface layer (101), a module adding control, which is configured to import module data of a third-party module to the data processing layer (102), wherein the third-party module is not an existing module of the system itself, but a module independently designed and developed by the third party, and wherein the N modules comprise the third-party module, and N is a positive integer greater than or equal to 1; displaying (1102), by the application interface layer (101), a flow chart in response to a first operation of a user on one or more module displaying controls in the N module displaying controls, wherein the flow chart indicates an execution order of modules respectively corresponding to the one or more module displaying controls; calling and running (1103), by the data processing layer (102), the module data of the modules respectively corresponding to the one or more module displaying controls in response to the flow chart displayed by the application interface layer (101), to obtain a data processing result of the flow chart, and returning, by the data processing layer (102), the data processing result to the application interface layer (101),
wherein the method further comprises: generating, by the data processing layer (102), a first code package based on the flow chart, which indicates an execution logic of each of modules comprised in the flow chart and an execution order of the modules comprised in the flow chart; and controlling, by the data processing layer (102), the application interface layer (101) to display a first code control corresponding to the first code package, wherein the first code control is configured to instruct the user to download the first code package, and the first code package is allowed to be imported into a third-party system and enables the flow chart to be displayed after being run on the third-party system.

2. The method according to claim 1, wherein the method further comprises: acquiring (1001), by the application interface layer (101), the module data of the third-party module imported by the user through the module adding control in response to a second operation on the module adding control, and sending, by the application interface layer (101), the imported module data of the third-party module to the data processing layer (102); storing (1002), by the data processing layer (102), the imported module data of the third-party module when verifying the imported module data of the third-party module to meet a reference rule, and returning, by the data processing layer (102), a module loading success message to the application interface layer (101), wherein the module loading success message indicates that the third-party module is successfully loaded.

3. The method according to claim 2, wherein the reference rule comprises a design mode of an input/output interface of the third-party module and/or a package mode of the module data of the third-party module; wherein the design mode of the input/output interface of the third-party module comprises a format of input data and/or output data of the third-party module, wherein the package mode of the module data of the third-party module indicates a storage format of the module data of the third-party module in the data processing layer (102), and the storage format comprises any one of a dynamic link library, static link library and exe file.

4. The method according to claim 2 or 3, wherein the method further comprises: displaying, by the application interface layer (101), a module configuration file indicating the reference rule in response to a third operation on the module adding control.

5. The method according to claim 1, wherein the method further comprises: displaying, by the application interface layer (101), a module configuration interface of a first module corresponding to a first module displaying control in the N module displaying controls in response to a fourth operation of the user on the first module displaying control, wherein the module configuration interface comprises a plurality of module configuration controls, and any one of the plurality of module configuration controls is configured to instruct the user to edit a parameter in execution of the first module; acquiring, by the application interface layer (101), a parameter edited by the user through the any one of the module configuration controls in response to a fifth operation on the any one of the module configuration controls, and sending, by the application interface layer (101), the edited parameter to the data processing layer (102); and updating, by the data processing layer (102), the module data of the first module based on the edited parameter; wherein when the flow chart comprises the first module, the data processing layer (102) updates the data processing result of the flow chart based on the updated module data of the first module, and returns the updated data processing result to the application interface layer (101).

6. The method according to claim 5, wherein when the first module is a third-party module, the module data of a first module imported by the user through the module adding control further comprises a module configuration interface file, which indicates a program code of a module configuration interface of the first module; and wherein the module configuration interface of the first module displayed by the application interface layer (101) is displayed according to the module configuration interface file in the module data of the first module.

7. The method according to claim 1, wherein the method further comprises: displaying, by the application interface layer (101), a running interface displaying control, wherein the running interface displaying control indicates the displaying of a running interface for the flow chart, and the running interface is configured to display running information of the flow chart, and the running information of the flow chart indicates intermediate data in running of the flow chart; and displaying, by the application interface layer (101), the running interface in response to a sixth operation on the running interface displaying control, to enable the user to view the intermediate data in running of the flow chart based on the running interface.

8. The method according to claim 7, wherein the method further comprises: displaying, by the application interface layer (101), a running interface configuration control, wherein the running interface configuration control indicates the displaying of a running interface configuration interface which is configured to configure contents displayed on the running interface; displaying, by the application interface layer (101), the running interface configuration interface in response to a seventh operation on the running interface configuration control, wherein the running interface configuration interface comprises a plurality of running interface configuration sub-controls, and any one of the plurality of running interface configuration sub-controls corresponds to an open option; and displaying, by the application interface layer (101), a content source option in response to an eighth operation on the open option of a first running interface configuration sub-control of the plurality of the running interface configuration sub-controls, and binding, by the application interface layer (101), the first running interface configuration sub-control with one module in the flow chart in response to a ninth operation on the content source option; wherein, the running information displayed on the running interface comprises data of the module bound to the first running interface configuration sub-control.

9. The method according to claim 7, wherein the method further comprises: exporting, by the data processing layer (102), a program code of the running interface as a second code package; and controlling, by the data processing layer (102), the application interface layer (101) to display a second code control corresponding to the second code package, wherein the second code control is configured to instruct the user to download the second code package, and the second code package is allowed to be imported into the third-party system and enables the running interface to be displayed after being run on the third-party system.

10. The method according to any one of claims 1 to 9, wherein the data processing layer (102) comprises a data scheduling layer and a functional module layer; module data of the N modules is stored in the functional module layer; the calling and running, by the data processing layer (102), the module data of the modules respectively corresponding to the one or more module displaying controls in response to the flow chart displayed by the application interface layer (101), to obtain the data processing result of the flow chart, comprises: sequentially calling and running, by the data scheduling layer, the module data of the modules respectively corresponding to the one or more module displaying controls from the functional module layer according to the execution order of the modules respectively corresponding to the one or more module displaying controls in the flow chart, to obtain the data processing result.

11. The method according to claim 1, wherein the method further comprises: displaying (1003), by the application interface layer (101), a module registration control, and displaying, by the application interface layer (101), the N module displaying controls in response to the N modules selected by the user from M modules through the module registration control, wherein module data of the M modules is stored in the data processing layer (102), and M is a positive integer greater than or equal to N.

12. The method according to claim 11, wherein the N modules are modules verified by the data processing layer (102) to be valid, and the modules verified to be valid refer to corresponding modules that the user has permission to use.

13. The method according to claim 1, wherein the method further comprises: displaying, by the application interface layer (101), a calling control for any one of the module displaying controls, wherein the calling control indicates that the user is allowed to call a module corresponding to the any one of the module displaying controls in a third-party system; displaying, by the application interface layer (101), a port link of module data of the module corresponding to the any one of the module displaying controls in response to a tenth operation on the calling control; and acquiring, by the application interface layer (101), the module data of the module corresponding to the any one of the module displaying controls from the data processing layer (102) based on the port link when detecting a data calling request for the port link sent by the third-party system, and sending, by the application interface layer (101), the acquired module data to the third-party system.

14. A system for visual software development, comprising an application interface layer (101) and a data processing layer (102), wherein the system is configured to execute the method according to any one of claims 1 to 13.

15. An apparatus for visual software development, (1200) comprising: a processor; a memory for storing processor-executable instructions; wherein, the processor is configured to execute the method according to any one of claims 1 to 13.

16. A computer-readable storage medium having instructions stored thereon which, when executed by a processor, execute the method according to any one of claims 1 to 13.

17. A computer program product containing instructions which, when run on a computer, cause the computer to execute the method according to any one of claims 1 to 13.

## Patentansprüche

1. Ein Verfahren zur visuellen Softwareentwicklung, das von einem System zur visuellen Softwareentwicklung ausgeführt wird, das eine Anwendungsschnittstellenschicht (101) und eine Datenverarbeitungsschicht (102) umfasst, wobei das Verfahren umfasst: Anzeigen (1101) durch die Anwendungsschnittstellenschicht (101) N Modul-Anzeigesteuerelemente, wobei die N Modul-Anzeigesteuerelemente jeweils N Modulen entsprechen, Moduldaten jedes der N Module in der Datenverarbeitungsschicht (102) gespeichert sind und die Moduldaten eine Ausführungslogik eines entsprechenden Moduls umfassen; das weitere Anzeigen eines Modul-Hinzufügungssteuerelements durch die Anwendungsschnittstellenschicht (101), das so konfiguriert ist, dass es Moduldaten eines Drittanbieter-Moduls in die Datenverarbeitungsschicht (102) importiert, wobei das Drittanbieter-Modul kein bestehendes Modul des Systems selbst ist, sondern ein von dem Drittanbieter unabhängig entworfenes und entwickeltes Modul, und wobei die N Module das Drittanbieter-Modul umfassen und N eine positive ganze Zahl größer oder gleich 1 ist; Anzeigen (1102) eines Flussdiagramms durch die Anwendungsschnittstellenschicht (101) als Reaktion auf einen ersten Vorgang eines Benutzers an einem oder mehreren Modul-Anzeigesteuerelementen unter den N Modul-Anzeigesteuerelementen, wobei das Flussdiagramm eine Ausführungsreihenfolge von Modulen angibt, die jeweils den einen oder mehreren Modul-Anzeigesteuerelementen entsprechen; Aufrufen und Ausführen (1103) der Moduldaten der Module, die jeweils den einen oder mehreren Modul-Anzeigesteuerelementen entsprechen, durch die Datenverarbeitungsschicht (102) als Reaktion auf das von der Anwendungsschnittstellenschicht (101) angezeigte Flussdiagramm, um ein Datenverarbeitungsergebnis des Flussdiagramms zu erhalten, und Zurückgeben des Datenverarbeitungsergebnisses an die Anwendungsschnittstellenschicht (101) durch die Datenverarbeitungsschicht (102),
wobei das Verfahren ferner umfasst: Erzeugen eines ersten Codepakets durch die Datenverarbeitungsschicht (102) auf der Grundlage des Flussdiagramms, welches eine Ausführungslogik jedes der im Flussdiagramm enthaltenen Module und eine Ausführungsreihenfolge der im Flussdiagramm enthaltenen Module angibt; und das Steuern der Anwendungsschnittstellenschicht (101) durch die Datenverarbeitungsschicht (102), um ein erstes Code-Steuerelement anzuzeigen, das dem ersten Codepaket entspricht, wobei das erste Code-Steuerelement so konfiguriert ist, dass es den Benutzer anweist, das erste Codepaket herunterzuladen, und das erste Codepaket in ein System eines Drittanbieters importiert werden kann und die Anzeige des Flussdiagramms ermöglicht, nachdem es auf dem System des Drittanbieters ausgeführt wurde.

2. Das Verfahren nach Anspruch 1, wobei das Verfahren ferner umfasst: das Erfassen (1001) durch die Anwendungsschnittstellenschicht (101) der Moduldaten des vom Benutzer über die Modul-Hinzufügungssteuerung importierten Drittanbieter-Moduls als Reaktion auf einen zweiten Vorgang an der Modul-Hinzufügungssteuerung sowie das Senden der importierten Moduldaten des Drittanbieter-Moduls durch die Anwendungsschnittstellenschicht (101) an die Datenverarbeitungsschicht (102); das Speichern (1002) der importierten Moduldaten des Drittanbieter-Moduls durch die Datenverarbeitungsschicht (102), wenn bei der Überprüfung festgestellt wird, dass die importierten Moduldaten des Drittanbieter-Moduls einer Referenzregel entsprechen, und das Zurückgeben einer Meldung über das erfolgreiche Laden des Moduls durch die Datenverarbeitungsschicht (102) an die Anwendungsschnittstellenschicht (101), wobei die Meldung über das erfolgreiche Laden des Moduls anzeigt, dass das Drittanbieter-Modul erfolgreich geladen wurde.

3. Das Verfahren nach Anspruch 2, wobei die Referenzregel einen Entwurfsmodus einer Ein-/Ausgabeschnittstelle des Drittanbieter-Moduls und/oder einen Paketmodus der Moduldaten des Drittanbieter-Moduls umfasst; wobei der Entwurfsmodus der Ein-/Ausgabeschnittstelle des Drittanbieter-Moduls ein Format von Eingabedaten und/oder Ausgabedaten des Drittanbieter-Moduls umfasst, wobei der Paketmodus der Moduldaten des Drittanbieter-Moduls ein Speicherformat der Moduldaten des Drittanbieter-Moduls in der Datenverarbeitungsschicht (102) angibt und das Speicherformat eine der folgenden Formen umfasst: eine Dynamic-Link-Bibliothek, eine Static-Link-Bibliothek oder eine EXE-Datei.

4. Das Verfahren nach Anspruch 2 oder 3, wobei das Verfahren ferner umfasst: Anzeigen einer Modulkonfigurationsdatei, die die Referenzregel angibt, durch die Anwendungsschnittstellenschicht (101) als Reaktion auf einen dritten Vorgang im Rahmen der Modulhinzufügungssteuerung.

5. Das Verfahren nach Anspruch 1, wobei das Verfahren ferner umfasst: das Anzeigen einer einer Modulkonfigurationsschnittstelle eines ersten Moduls, die einem ersten Modul-Anzeigesteuerelement unter den N Modul-Anzeigesteuerelementen entspricht, durch die Anwendungsschnittstellenschicht (101) als Reaktion auf einen vierten Vorgang des Benutzers am ersten Modul-Anzeigesteuerelement, wobei die Modulkonfigurationsschnittstelle eine Vielzahl von Modulkonfigurationssteuerelementen umfasst und jedes der Vielzahl von Modulkonfigurationssteuerelementen so konfiguriert ist, den Benutzer zur Bearbeitung eines Parameters für die Ausführung des ersten Moduls anzuleiten; Erfassen eines vom Benutzer über eines der Modulkonfigurationssteuerelemente bearbeiteten Parameters durch die Anwendungsschnittstellenschicht (101) als Reaktion auf einen fünften Vorgang des einen Modulkonfigurationssteuerelements sowie Senden des bearbeiteten Parameters durch die Anwendungsschnittstellenschicht (101) an die Datenverarbeitungsschicht (102); und Aktualisieren der Moduldaten des ersten Moduls durch die Datenverarbeitungsschicht (102) auf der Grundlage der bearbeiteten Parameter; wobei, wenn das Flussdiagramm das erste Modul umfasst, die Datenverarbeitungsschicht (102) das Datenverarbeitungsergebnis des Flussdiagramms auf der Grundlage der aktualisierten Moduldaten des ersten Moduls aktualisiert und das aktualisierte Datenverarbeitungsergebnis an die Anwendungsschnittstellenschicht (101) zurückgibt.

6. Das Verfahren nach Anspruch 5, wobei, wenn es sich bei dem ersten Modul um ein Modul eines Drittanbieters handelt, die Moduldaten eines vom Benutzer über die Modul-Hinzufügungssteuerung importierten ersten Moduls ferner eine Modulkonfigurationsschnittstellendatei umfassen, die einen Programmcode einer Modulkonfigurationsschnittstelle des ersten Moduls angibt; und wobei die von der Anwendungsschnittstellenschicht (101) angezeigte Modulkonfigurationsschnittstelle des ersten Moduls gemäß der Modulkonfigurationsschnittstellendatei in den Moduldaten des ersten Moduls angezeigt wird.

7. Das Verfahren nach Anspruch 1, wobei das Verfahren ferner umfasst: Anzeigen einer Laufzeitschnittstellen-Anzeigesteuerung durch die Anwendungsschnittstellenschicht (101), wobei die Laufzeitschnittstellen-Anzeigesteuerung die Anzeige einer Laufzeitschnittstelle für das Flussdiagramm angibt und die Laufzeitschnittstellen so konfiguriert ist, dass sie Laufzeitinformationen des Flussdiagramms anzeigt, und wobei die Laufzeitinformationen des Flussdiagramms Zwischendaten während der Ausführung des Flussdiagramms angeben; sowie das Anzeigen der der Laufzeitschnittstelle durch die Anwendungsschnittstellenschicht (101) als Reaktion auf einen sechsten Vorgang bezüglich der Laufzeitschnittstellen-Anzeigesteuerung, sodass der Benutzer die Zwischendaten während der Ausführung des Flussdiagramms über die Laufzeitschnittstelle anzeigen kann.

8. Das Verfahren nach Anspruch 7, wobei das Verfahren ferner umfasst: Anzeigen einer Laufzeitschnittstellen-Konfigurationssteuerung durch die Anwendungsschnittstellenschicht (101), wobei die Laufzeitschnittstellen-Konfigurationssteuerung die Anzeige einer Laufzeitschnittstellen-Konfigurationssteuerung anzeigt, die dazu konfiguriert ist, auf der Laufzeitschnittstelle angezeigte Inhalte zu konfigurieren; Anzeigen der Laufzeitschnittstellen-Konfigurationsschnittstelle durch die Anwendungsschnittstellenschicht (101) als Reaktion auf einen siebten Vorgang des Ausführungsschnittstellen-Konfigurationssteuerung, wobei die Laufzeitschnittstellen -Konfigurationsschnittstelle eine Vielzahl von Laufzeitschnittstellen-Konfigurations-Untersteuerelementen umfasst und jedes der Vielzahl von Laufzeitschnittstellen - Konfigurations-Untersteuerelementen einer Öffnungsoption entspricht; und Anzeigen einer Inhaltsquellenoption durch die Anwendungsschnittstellenschicht (101) als Reaktion auf einen achten Vorgang der Öffnungsoption eines ersten Laufzeitschnittstellen-Konfigurations-Untersteuerelementen aus der Vielzahl der Laufzeitschnittstellen-Konfigurations-Untersteuerelementen sowie Verknüpfen der ersten Laufzeitschnittstellen-Konfigurations-Untersteuerelementen mit einem Modul im Flussdiagramm durch die Anwendungsschnittstellenschicht (101) als Reaktion auf einen neunten Vorgang bezüglich der Inhaltsquellenoption; wobei die auf der Laufzeitschnittstelle angezeigten Laufzeitinformationen Daten des Moduls umfassen, das an das erste Laufzeitschnittstellen-Konfigurations-Untersteuerelementen gebunden ist.

9. Das Verfahren nach Anspruch 7, wobei das Verfahren ferner umfasst: das Exportieren eines Programmcodes der Laufzeitschnittstelle als zweites Codepaket durch die Datenverarbeitungsschicht (102); und das Steuern der Anwendungsschnittstellenschicht (101) durch die Datenverarbeitungsschicht (102), um ein zweites Code-Steuerelement anzuzeigen, das dem zweiten Codepaket entspricht, wobei das zweite Code-Steuerelement so konfiguriert ist, dass es den Benutzer anweist, das zweite Codepaket herunterzuladen, und das zweite Codepaket in das Drittanbietersystem importiert werden kann und es ermöglicht, die Laufzeitschnittstelle nach ihrer Ausführung auf dem Drittanbietersystem anzuzeigen.

10. Das Verfahren nach einem der Ansprüche 1 bis 9, wobei die Datenverarbeitungsschicht (102) eine Datenplanungsschicht und eine Funktionsmodulschicht umfasst; Moduldaten der N Module sind in der Funktionsmodulschicht gespeichert; das Aufrufen und Ausführen der Moduldaten der Module, die jeweils den einen oder mehreren Modul-Anzeigesteuerelementen entsprechen, durch die Datenverarbeitungsschicht (102) als Reaktion auf den von der Anwendungsschnittstellenschicht (101) angezeigten Flussdiagramm, um das Datenverarbeitungsergebnis des Flussdiagramms zu erhalten, umfasst: das sequenzielle Aufrufen und Ausführen der Moduldaten der Module, die jeweils den einen oder mehreren Modul-Anzeigesteuerelementen entsprechen, durch die Datenplanungsschicht aus der Funktionsmodulschicht gemäß der Ausführungsreihenfolge der Module, die jeweils den einen oder mehreren Modul-Anzeigesteuerelementen im Flussdiagramm entsprechen, um das Datenverarbeitungsergebnis zu erhalten.

11. Das Verfahren nach Anspruch 1, wobei das Verfahren ferner umfasst: das Anzeigen (1003) durch die Anwendungsschnittstellenschicht (101), eines Modulregistrierungssteuerelements und Anzeigen, durch die Anwendungsschnittstellenschicht (101) der N Modul-Anzeigesteuerelemente als Reaktion auf die N Module, die der Benutzer aus M Modulen über das Modul-Registrierungssteuerelement ausgewählt hat, wobei Moduldaten der M Module in der Datenverarbeitungsschicht (102) gespeichert sind und M eine positive ganze Zahl größer oder gleich N ist.

12. Das Verfahren nach Anspruch 11, wobei die N Module Module sind, deren Gültigkeit von der Datenverarbeitungsschicht (102) überprüft wurde, und wobei die als gültig überprüften Module sich auf entsprechende Module beziehen, für deren Nutzung der Benutzer eine Berechtigung besitzt.

13. Das Verfahren nach Anspruch 1, wobei das Verfahren ferner umfasst: Anzeigen eines Aufrufsteuerelements für eines der Modul-Anzeigesteuerelemente durch die Anwendungsschnittstellenschicht (101), wobei das Aufrufsteuerelement anzeigt, dass der Benutzer ein Modul aufrufen darf, das einem der Modul-Anzeigesteuerelemente in einem System eines Drittanbieters entspricht; Anzeigen eines Port-Links zu den Moduldaten des Moduls, das einem der Modul-Anzeigesteuerelemente entspricht, durch die Anwendungsschnittstellenschicht (101) als Reaktion auf einen zehnten Vorgang an dem Aufrufsteuerelement; und das Erfassen der Moduldaten des Moduls, das einem der Modul-Anzeigesteuerelemente entspricht, durch die Anwendungsschnittstellenschicht (101) aus der Datenverarbeitungsschicht (102) auf der Grundlage des Port-Links, wenn eine vom Drittanbietersystem gesendete Datenabrufanforderung für den Port-Link erkannt wird, sowie das Senden der erfassten Moduldaten durch die Anwendungsschnittstellenschicht (101) an das Drittanbietersystem.

14. Ein System zur visuellen Softwareentwicklung, umfassend eine Anwendungsschnittstellenschicht (101) und eine Datenverarbeitungsschicht (102), wobei das System so konfiguriert ist, dass es das Verfahren gemäß einem der Ansprüche 1 bis 13 ausführt.

15. Eine Vorrichtung zur visuellen Softwareentwicklung (1200), umfassend: einen Prozessor; einen Speicher zum Speichern von durch den Prozessor ausführbaren Befehlen; wobei der Prozessor so konfiguriert ist, dass er das Verfahren gemäß einem der Ansprüche 1 bis 13 ausführt.

16. Ein computerlesbares Speichermedium, auf dem Befehle gespeichert sind, die, wenn sie von einem Prozessor ausgeführt werden, das Verfahren gemäß einem der Ansprüche 1 bis 13 ausführen.

17. Ein Computerprogrammprodukt, das Befehle enthält, die, wenn sie auf einem Computer ausgeführt werden, den Computer veranlassen, das Verfahren gemäß einem der Ansprüche 1 bis 13 auszuführen.

## Revendications

1. Un procédé de développement visuel de logiciels, mis en œuvre par un système de développement visuel de logiciels comprenant une couche d'interface d'application (101) et une couche de traitement de données (102), le procédé comprenant : l'affichage (1101), par la couche d'interface d'application (101), N contrôles d'affichage de modules, lesdits N contrôles d'affichage de modules correspondant respectivement à N modules, les données de module de chacun des N modules étant stockées dans la couche de traitement de données (102), et lesdites données de module comprenant une logique d'exécution d'un module correspondant ; l'affichage supplémentaire, par la couche d'interface d'application (101), d'un élément de commande d'ajout de module, qui est configuré pour importer les données de module d'un module tiers dans la couche de traitement de données (102), le module tiers n'étant pas un module existant du système lui-même, mais un module conçu et développé de manière indépendante par le tiers, et les N modules comprenant le module tiers, N étant un entier positif supérieur ou égal à 1 ; l'affichage (1102), par la couche d'interface d'application (101), d'un organigramme en réponse à une première opération d'un utilisateur sur un ou plusieurs éléments de commande d'affichage de modules parmi les N éléments de commande d'affichage de modules, l'organigramme indiquant un ordre d'exécution des modules correspondant respectivement au ou aux éléments de commande d'affichage de modules ; l'appel et l'exécution (1103), par la couche de traitement des données (102), des données des modules correspondant respectivement à la ou aux commandes d'affichage de module en réponse à l'organigramme affiché par la couche d'interface d'application (101), afin d'obtenir un résultat de traitement des données de l'organigramme, et le renvoi, par la couche de traitement des données (102), du résultat de traitement des données à la couche d'interface d'application (101),
dans lequel le procédé comprend en outre : la génération, par la couche de traitement des données (102), d'un premier ensemble de codes basé sur l'organigramme, qui indique une logique d'exécution de chacun des modules compris dans l'organigramme et un ordre d'exécution des modules compris dans l'organigramme ; et le contrôle, par la couche de traitement de données (102), de la couche d'interface d'application (101) afin qu'elle affiche un premier élément de contrôle de code correspondant au premier ensemble de code, dans lequel le premier élément de contrôle de code est configuré pour inviter l'utilisateur à télécharger le premier ensemble de code, et le premier ensemble de code peut être importé dans un système tiers et permet l'affichage de l'organigramme après son exécution sur le système tiers.

2. Le procédé selon la revendication 1, dans lequel le procédé comprend en outre : l'acquisition (1001), par la couche d'interface d'application (101), des données de module du module tiers importées par l'utilisateur via le contrôle d'ajout de module en réponse à une deuxième opération sur ledit contrôle d'ajout de module, et l'envoi, par la couche d'interface d'application (101), les données du module tiers importé à la couche de traitement des données (102) ; le stockage (1002), par la couche de traitement des données (102), des données du module tiers importé après vérification de la conformité de ces données à une règle de référence, et le renvoi, par la couche de traitement des données (102), d'un message de chargement réussi du module à la couche d'interface d'application (101), ce message indiquant que le module tiers a été chargé avec succès.

3. Le procédé selon la revendication 2, dans lequel la règle de référence comprend un mode de conception d'une interface d'entrée/sortie du module tiers et/ou un mode de packaging des données du module tiers ; le mode de conception de l'interface d'entrée/sortie du module tiers comprenant un format de données d'entrée et/ou de données de sortie du module tiers, le mode de packaging des données du module tiers indiquant un format de stockage des données du module tiers dans la couche de traitement des données (102), et le format de stockage comprenant l'un quelconque parmi une bibliothèque de liens dynamiques, une bibliothèque de liens statiques et un fichier exe.

4. Le procédé selon la revendication 2 ou 3, dans lequel le procédé comprend en outre : l'affichage, par la couche d'interface d'application (101), d'un fichier de configuration de module indiquant la règle de référence en réponse à une troisième opération sur la commande d'ajout de module.

5. Le procédé selon la revendication 1, dans lequel le procédé comprend en outre : l'affichage, par la couche d'interface d'application (101), une interface de configuration de module d'un premier module correspondant à une première commande d'affichage de module parmi les N commandes d'affichage de module, en réponse à une quatrième opération effectuée par l'utilisateur sur la première commande d'affichage de module, dans lequel l'interface de configuration de module comprend une pluralité de commandes de configuration de module, et l'une quelconque de la pluralité de commandes de configuration de module est configurée pour inviter l'utilisateur à modifier un paramètre lors de l'exécution du premier module ; l'acquisition, par la couche d'interface d'application (101), d'un paramètre modifié par l'utilisateur via l'un quelconque des éléments de commande de configuration de module en réponse à une cinquième opération effectuée sur l'un quelconque des éléments de commande de configuration de module, et l'envoi, par la couche d'interface d'application (101), du paramètre modifié à la couche de traitement des données (102) ; et la mise à jour, par la couche de traitement des données (102), des données du premier module sur la base du paramètre modifié ; dans lequel, lorsque l'organigramme comprend le premier module, la couche de traitement des données (102) met à jour le résultat du traitement des données de l'organigramme sur la base des données mises à jour du premier module, et renvoie le résultat du traitement des données mis à jour à la couche d'interface d'application (101).

6. Le procédé selon la revendication 5, dans lequel, lorsque le premier module est un module tiers, les données de module d'un premier module importé par l'utilisateur via la commande d'ajout de module comprennent en outre un fichier d'interface de configuration de module, qui indique un code de programme d'une interface de configuration de module du premier module ; et dans lequel l'interface de configuration de module du premier module affichée par la couche d'interface d'application (101) est affichée conformément au fichier d'interface de configuration de module figurant dans les données de module du premier module.

7. Le procédé selon la revendication 1, dans lequel le procédé comprend en outre : l'affichage, par la couche d'interface d'application (101), d'une commande d'affichage de l'interface d'exécution, dans laquelle la commande d'affichage de l'interface d'exécution indique l'affichage d'une interface d'exécution pour l'organigramme, et l'interface d'exécution est configurée pour afficher des informations d'exécution de l'organigramme, et les informations d'exécution de l'organigramme indiquent des données intermédiaires lors de l'exécution de l'organigramme ; et l'affichage, par la couche d'interface d'application (101), de l'interface d'exécution en réponse à une sixième opération sur la commande d'affichage de l'interface d'exécution, afin de permettre à l'utilisateur de visualiser les données intermédiaires lors de l'exécution de l'organigramme à partir de l'interface d'exécution.

8. Le procédé selon la revendication 7, dans lequel le procédé comprend en outre : l'affichage, par la couche d'interface d'application (101), d'un élément de commande de configuration de l'interface d'exécution, dans lequel l'élément de commande de configuration de l'interface d'exécution indique l'affichage d'une interface de configuration de l'interface d'exécution qui est configurée pour configurer les contenus affichés sur l'interface d'exécution ; l'affichage, par la couche d'interface d'application (101), de l'interface de configuration de l'interface d'exécution en réponse à une septième opération sur le contrôle de configuration de l'interface d'exécution, dans laquelle l'interface de configuration de l'interface d'exécution comprend une pluralité de sous-contrôles de configuration de l'interface d'exécution, et l'un quelconque de la pluralité de sous-contrôles de configuration de l'interface d'exécution correspond à une option d'ouverture ; et l'affichage, par la couche d'interface d'application (101), d'une option de source de contenu en réponse à une huitième opération sur l'option d'ouverture d'un premier sous-contrôle de configuration de l'interface active parmi la pluralité de sous-contrôles de configuration de l'interface active, et la liaison, par la couche d'interface d'application (101), le premier sous-contrôle de configuration de l'interface d'exécution associé à un module dans l'organigramme en réponse à une neuvième opération sur l'option de source de contenu ; dans lequel les informations d'exécution affichées sur l'interface d'exécution comprennent des données du module lié au premier sous-contrôle de configuration de l'interface d'exécution.

9. Le procédé selon la revendication 7, dans lequel le procédé comprend en outre : l'exportation, par la couche de traitement des données (102), d'un code de programme de l'interface d'exécution sous la forme d'un deuxième paquet de code ; et le contrôle, par la couche de traitement des données (102), de la couche d'interface d'application (101) afin d'afficher un deuxième contrôle de code correspondant au deuxième paquet de code, dans lequel le deuxième contrôle de code est configuré pour inviter l'utilisateur à télécharger le deuxième paquet de code, et le deuxième paquet de code peut être importé dans le système tiers et permet l'affichage de l'interface d'exécution après son exécution sur le système tiers.

10. Le procédé selon l'une quelconque des revendications 1 à 9, dans lequel la couche de traitement des données (102) comprend une couche de planification des données et une couche de modules fonctionnels ; les données des N modules sont stockées dans la couche de modules fonctionnels ; l'appel et l'exécution, par la couche de traitement de données (102), des données des modules correspondant respectivement à un ou plusieurs contrôles d'affichage de modules en réponse à l'organigramme affiché par la couche d'interface d'application (101), afin d'obtenir le résultat du traitement de données de l'organigramme, comprennent : l'appel et l'exécution séquentiels, par la couche de planification des données, des données des modules correspondant respectivement à un ou plusieurs contrôles d'affichage de modules à partir de la couche de modules fonctionnels, selon l'ordre d'exécution des modules correspondant respectivement à un ou plusieurs contrôles d'affichage de modules dans l'organigramme, afin d'obtenir le résultat du traitement des données.

11. Le procédé selon la revendication 1, dans lequel le procédé comprend en outre : l'affichage (1003), par la couche d'interface d'application (101), d'un élément de commande d'enregistrement de module, et l'affichage, par la couche d'interface d'application (101), les N commandes d'affichage de modules en réponse aux N modules sélectionnés par l'utilisateur parmi M modules via la commande d'enregistrement de module, les données de module des M modules étant stockées dans la couche de traitement de données (102), et M étant un entier positif supérieur ou égal à N.

12. Le procédé selon la revendication 11, dans lequel les N modules sont des modules dont la validité a été vérifiée par la couche de traitement des données (102), et les modules dont la validité a été vérifiée correspondent aux modules que l'utilisateur est autorisé à utiliser.

13. Le procédé selon la revendication 1, dans lequel le procédé comprend en outre : l'affichage, par la couche d'interface d'application (101), d'un contrôle d'appel pour l'un quelconque des contrôles d'affichage de module, ledit contrôle d'appel indiquant que l'utilisateur est autorisé à appeler un module correspondant à l'un quelconque des contrôles d'affichage de module dans un système tiers ; l'affichage, par la couche d'interface d'application (101), d'un lien de port vers les données du module correspondant à l'un quelconque des contrôles d'affichage de module, en réponse à une dixième opération sur le contrôle d'appel ; et l'acquisition, par la couche d'interface d'application (101), des données du module correspondant à l'un quelconque des contrôles d'affichage de module à partir de la couche de traitement de données (102) sur la base du lien de port lors de la détection d'une requête d'appel de données pour ledit lien de port envoyée par le système tiers, et l'envoi, par la couche d'interface d'application (101), des données du module acquises vers le système tiers.

14. Un système de développement visuel de logiciels, comprenant une couche d'interface d'application (101) et une couche de traitement de données (102), dans lequel le système est configuré pour exécuter le procédé selon l'une quelconque des revendications 1 à 13.

15. Un dispositif de développement visuel de logiciels (1200) comprenant : un processeur ; une mémoire destinée à stocker des instructions exécutables par le processeur ; dans lequel le processeur est configuré pour exécuter le procédé selon l'une quelconque des revendications 1 à 13.

16. Un support de stockage lisible par ordinateur sur lequel sont stockées des instructions qui, lorsqu'elles sont exécutées par un processeur, mettent en œuvre le procédé selon l'une quelconque des revendications 1 à 13.

17. Un produit programme d'ordinateur contenant des instructions qui, lorsqu'elles sont exécutées sur un ordinateur, amènent l'ordinateur à mettre en œuvre le procédé selon l'une quelconque des revendications 1 à 13.
